# EUROPEAN PATENT APPLICATION

(11) **EP 4 738 650 A1**
(43) Date of publication of application: **06.05.2026**
(21) Application number: 24831479.1
(22) Date of filing: 21.05.2024
(51) Int. Cl.: H02J 50/80, H02J 7/00

(54) **POWER TRANSMISSION DEVICE, METHOD EXECUTED BY POWER TRANSMISSION DEVICE, AND PROGRAM**

(30) Priority: 29.06.2023 JP 2023107045
(71) Applicant: CANON KABUSHIKI KAISHA, Ohta-ku Tokyo 146-8501 (JP)
(72) Inventor: IKEDA, Nobuhiro, Tokyo 146-8501 (JP); SHICHINO, Takahiro, Tokyo 146-8501 (JP)
(74) Representative: Canon Europe Limited
(86) International application number: PCT/JP2024/018611
(87) International publication number: WO 2025/004607

(57) **Abstract**

A power transmission device 100 performs an authentication process using an electronic certificate together with a power reception device 200. The power transmission device 100 performs power transmission control to the power reception device 200 on the basis of a cause of unsuccess of the authentication.

## Description

### [Technical Field]

The present disclosure relates to wireless power transfer technology.

### [Background Art]

A standard established by the standardization organization Wireless Power Consortium (hereinafter referred to as a WPC standard) is widely known as a noncontact charging standard. In Patent Document 1, a power transmission device and a power reception device based on the WPC standard are disclosed. In Patent Document 2, an authentication method between a power transmission device and a power reception device in noncontact charging is disclosed. The power transmission device disclosed in Patent Document 2 transmits challenge data to the power reception device. The power reception device transmits response data generated by performing an authentication operation on the challenge data to the power transmission device. The power transmission device executes an authentication protocol through comparison with the response data received from the power reception device. Accordingly, it is possible to perform an authentication process with high security. In Patent Document 3, a wireless power transfer system in which interactive authentication is performed is disclosed. A power transmission device and a power reception device can interactively ascertain the validity of electronic certificates and determine a transmission/reception power value according to the result of ascertainment.

### [Citation List]

### [Patent Document]

Patent Document 1: Japanese Unexamined Patent Application, First Publication No. 2016-007116
Patent Document 2: Japanese Unexamined Patent Application, First Publication No. 2010-104097
Patent Document 3: Japanese Unexamined Patent Application, First Publication No. 2022-043259

### [Summary of Invention]

### [Technical Problem]

When the interactive authentication between the power transmission device and the power reception device has not succeeded, countermeasures therefor are necessary. In this case, in the related art, it has not been studied what power transmission control is appropriate. Particularly, a technique for performing detailed power transmission control corresponding to an authentication error which occurs when the power transmission device serves as an initiator and authenticates the power reception device has not been disclosed yet.

The present disclosure relates to determining control details based on a result of authentication which is performed on a power reception device by a power transmission device and performing power transmission control.

### [Solution to Problem]

A power transmission device according to an embodiment of the present disclosure includes a power transmission means configured to wirelessly transmit power to a power reception device; and an authentication means configured to perform an authentication process using an electronic certificate together with the power reception device. When the authentication has not succeeded, the power transmission means performs power transmission control on the basis of a cause of unsuccess of the authentication.

### [Advantageous Effects of Invention]

According to the present disclosure, it is possible to determine control details based on a result of authentication which is performed on a power reception device by a power transmission device and to perform power transmission control.

### [Brief Description of Drawings]

FIG. 1 is a block diagram illustrating an example of a configuration of a noncontact charging system.
FIG. 2 is a block diagram illustrating an example of a configuration of a power transmission device.
FIG. 3 is a block diagram illustrating an example of a configuration of a power reception device.
FIG. 4 is a diagram illustrating an example of an operation sequence of the noncontact charging system.
FIG. 5 is a flowchart illustrating a process of setting guaranteed power (GP).
FIG. 6 is a diagram illustrating an example of a relationship between a result of authentication and a GP set value.
FIG. 7 is a flowchart illustrating a process flow up to power transfer in the power transmission device.
FIG. 8 is a sequence diagram illustrating an example of communication between the power transmission device and the power reception device.
FIG. 9 is a flowchart illustrating a process flow up to power transfer in the power reception device.
FIG. 10 is a diagram illustrating an example of a configuration of a packet.
FIG. 11 is a flowchart illustrating another example of the process flow up to power transfer in the power reception device.
FIG. 12 is a flowchart illustrating another example of the process flow up to power transfer in the power transmission device.
FIG. 13 is a flowchart illustrating an authentication phase change in the power transmission device.
FIG. 14 is a flowchart illustrating authentication using an electronic certificate in the power transmission device.

### [Description of Embodiments]

Hereinafter, an embodiment of the present disclosure will be described in detail with reference to the accompanying drawings. A type and a modified example of a system according to the embodiment of the present disclosure will be first described. In the present disclosure, a wireless charging system (a noncontact charging system) employing a wireless power transfer system is described as an example. It is assumed that noncontact charging based on a WPC standard is performed between a power transmission device and a power reception device, but the present disclosure is not limited thereto and noncontact charging may be performed on the basis of other standards.

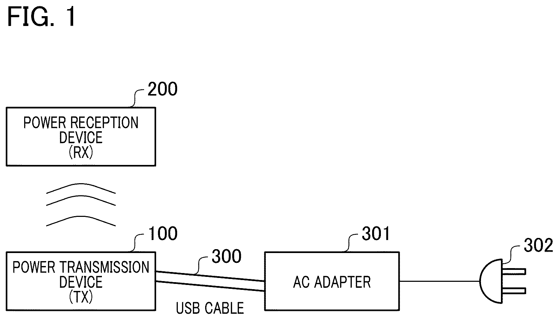

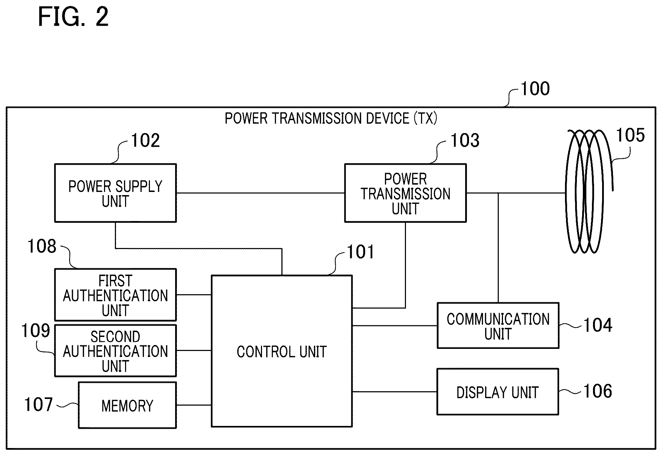

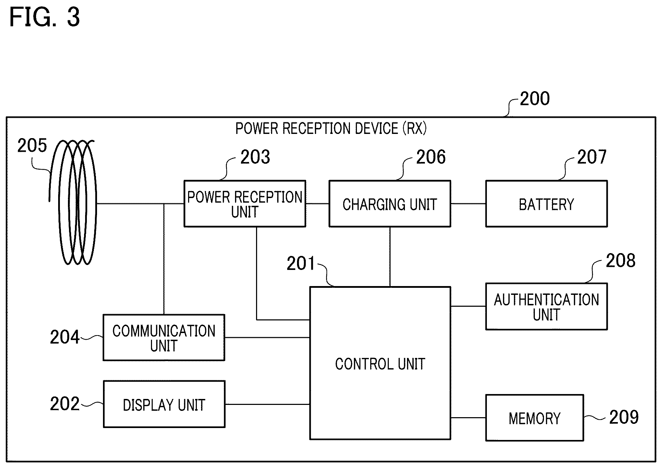

FIG. 1 illustrates an example of a configuration of a wireless power transfer system which includes a power transmission device 100 and a power reception device 200. In the following description, for the purpose of simplification, the power transmission device 100 may be referred to as TX, and the power reception device 200 may be referred to as RX. Detailed configurations of the TX and the RX will be described later with reference to FIGS. 2 and 3.

The power transmission device 100 (TX) is connected to an AC adapter 301 using a USB cable 300 and is supplied with power in a wired manner (hereinafter referred to as "wired power supply"). The AC adapter 301 converts a voltage of power from a commercial power supply supplied via a power supply plug 302 to a voltage appropriate for the TX and supplies the converted power to the TX. The TX supplies power in a wireless manner (hereinafter referred to as "wireless power supply") to the power reception device 200 (RX). The RX receives power wirelessly transmitted from the TX and charges, for example, a battery in the RX.

The configuration illustrated in FIG. 1 is an example, and other configurations may be used. In the following description, a configuration in which authentication associated with wired power supply can be performed will be described, but the present disclosure is not limited to this example and can be applied to a configuration in which authentication associated with wired power supply is not performed. A USB power-delivery standard is described as an example of a standard associated with wired power supply. It is assumed that authentication is performed on the basis of an authentication standard which is supported by the USB power-delivery standard.

The system configuration including one TX and one RX illustrated in FIG. 1 is an example. For example, the following configurations are conceivable.
- Configuration in which a plurality of TXs are supplied with power in a wired manner and the TXs transmit power to one RX.
- Configuration in which a plurality of TXs are supplied with power in a wired manner and the TXs transmit power to different RXs.
- Configuration in which one TX is supplied with power in a wired manner and the TX transmits power to a plurality of RXs.

An example of the configuration of the power transmission device 100 (TX) will be described below with reference to FIG. 2. FIG. 2 is a block diagram illustrating an example of the configuration of the TX. For example, the TX has a function which is prescribed in version 1.2.2 of the WPC standard (hereinafter referred to as "WPC standard v1.2.2"). It is assumed that the TX has a power supply capacity capable of outputting a maximum power of 15 watts to a charging unit of the RX corresponding to the WPC standard. The TX includes a control unit 101, a power supply unit 102, a power transmission unit 103, a communication unit 104, a power transmission coil 105, a display unit 106, a memory 107, a first authentication unit 108, and a second authentication unit 109.

The control unit 101 includes one or more processors such as a central processing unit (CPU) or a micro processing unit (MPU) and controls the TX as a whole. That is, the control unit 101 controls operations of the constituent units (102 to 109). The control unit 101 may include an application-specific integrated circuit (ASIC) or a field-programmable gate array (FPGA). The control unit 101 determines control details of power transmission on the basis of a result of WPT authentication which will be described later and a result of USB authentication for a wired power supply unit (such as the AC adapter 301 and the USB cable 300). For example, the control unit 101 sets a maximum value of a power allowable at the time of power transmission on the basis of the determined control details.

The power supply unit 102 is supplied with power for operation of the TX from the AC adapter 301 via the USB cable 300 and supplies power for operation of at least the control unit 101 and the power transmission unit 103. The power supply unit 102 has a configuration capable of complying with authentication and supply of power of a wired power supply device. The power supply unit 102 can comply with a USB power-delivery standard and an authentication standard for allowing connected USB devices to authenticate each other in order to be supplied with power via the USB cable 300. The TX may be supplied with power on the basis of a standard other than the USB power-delivery standard or may be configured to perform authentication on the basis of a standard other than the authentication standard. The power supply unit 102 or the first authentication unit 108 may be configured to comply with a plurality of standards. For example, the power supply unit 102 or the first authentication unit 108 can determine a standard to be used on the basis of what terminal of the TX is used according to a type of connection with a power supply.

The power transmission unit 103 generates an AC voltage and an AC current at the time of transmission of power to the RX via the power transmission coil 105. For example, the power transmission unit 103 can convert a DC voltage supplied from the power supply unit 102 to an AC voltage using a switching circuit with a half-bridge or full-bridge configuration. In this case, the power transmission unit 103 includes a plurality of field-effect transistors (FETs) constituting a bridge circuit and a gate driver controlling ON/OFF of the FETs.

The communication unit 104 performs control communication associated with control of noncontact charging based on the WPC standard with the RX (a communication unit 204 in FIG. 3). The communication unit 104 can perform so-called in-band communication of modulating an AC voltage or an AC current generated from the power transmission unit 103 and superimposing a signal of information to be transmitted to the RX on carrier waves of wireless power. The present disclosure is not limited thereto, and the communication unit 104 may perform communication with the RX through so-called out-of-band communication. An example of the out-of-band communication is communication based on NFC, RFID, Wi-Fi (registered trademark), Bluetooth (registered trademark) low energy, or the like. The out-of-band communication mentioned herein is communication which is performed without superimposing a signal on carrier waves of wireless power. At least a part of a frequency band used for the out-of-band communication is not included in the frequency band of power transfer. The frequency band used for the out-of-band communication and the frequency band for power transfer may not overlap each other at all.

The display unit 106 displays predetermined information such that a user can see the predetermined information. For example, the predetermined information is information indicating a state of the TX or information indicating a state of a noncontact charging system including devices such as the TX, the RX, the USB cable 300, and the AC adapter 301. The display unit 106 can be constituted by a light emitting diode (LED). The present disclosure is not limited thereto, and the display unit may employ a configuration including a speaker, a vibration generator circuit, and a display instead of the LED or in addition to the LED. The memory 107 stores information indicating states of the constituents of the TX and the noncontact charging system and a state as a whole, and the like.

The first authentication unit 108 performs authentication for the power supply unit 102 and the USB cable 300 and the AC adapter 301 connected to the power supply unit 102. The first authentication unit 108 can perform authentication based on a USB authentication standard. The present disclosure is not limited to this example, and another standard complying with authentication such as Quick Charge standard made by Qualcomm may be used.

The second authentication unit 109 performs authentication between the TX and the RX through communication performed by the communication unit 104. The authentication performed by the second authentication unit 109 is referred to as wireless power transfer (which is abbreviated to WPT) authentication. The second authentication unit 109 includes a first part used when the TX performs WPT authentication for the RX and a second part which is used when the RX performs WPT authentication for the TX. The first part and the second part may be separated, or the first part and the second part may be unified.

In FIG. 2, the control unit 101, the power supply unit 102, the power transmission unit 103, the communication unit 104, the memory 107, the first authentication unit 108, and the second authentication unit 109 are illustrated as individual block elements, but a plurality of block elements may be mounted in the same chip. For example, the power supply unit 102 complying with the USB power-delivery standard and the first authentication unit 108 complying with the USB authentication standard may be mounted in the same chip which is a USB-relevant chip. In this case, the TX has a configuration in which the control unit 101 and the USB-relevant chip are connected by general-purpose input/output (GPIO) or serial communication. A plurality of block elements out of the second authentication unit 109, the control unit 101, the memory 107, the power transmission unit 103, and the communication unit 104 may be mounted in the same chip. Alternatively, one block element illustrated in FIG. 2 may be divided into a plurality of block elements or may be mounted as a plurality of chips.

An example of a configuration of the power reception device 200 (RX) will be described below with reference to FIG. 3. FIG. 3 is a block diagram illustrating an example of a configuration of the RX. Similarly to the TX, the RX is based on the WPC standard and additionally has a function defined in WPC standard v1.2.2. For example, the RX includes a control unit 201, a display unit 202, a power reception unit 203, a communication unit 204, a power reception coil 205, a charging unit 206, a battery 207, an authentication unit 208, and a memory 209.

The control unit 201 may include one or more processors such as a CPU or an MPU, an ASIC, and an FPGA and controls the RX as a whole. The control unit 201 controls operations of the constituents (202 to 209). The control unit 201 determines control details of power reception on the basis of a result of authentication for the TX. For example, the control unit 201 sets a maximum value of a power required to the TX on the basis of the determined control details.

The display unit 202 displays predetermined information such that a user can see the predetermined information. For example, the predetermined information is information indicating a power supply state, a charging state of the RX, or the like. The display unit 202 may include a speaker, a vibration generator circuit, and a display in addition to an LED or instead of an LED.

The power reception unit 203 receives power of electromagnetic waves radiated from the power transmission coil 105 using the power reception coil 205. The power reception unit 203 converts an AC voltage and an AC current based on power reception to a DC voltage and a DC current which are used for the control unit 201, the charging unit 206, or the like to operate. For example, the power reception unit 203 has a capability of outputting a maximum power of 15 watts to the charging unit 206.

The communication unit 204 performs control communication associated with control of noncontact charging based on the WPC standard with the communication unit 104 of the TX. For example, this control communication is performed by load modulation. A power transfer state between the TX and the RX is changed by changing a load in the RX, and information can be transferred by changing a current flowing in the power transmission coil 105. The communication unit 204 can perform control communication through in-band communication using load modulation or the like or out-of-band communication. The charging unit 206 performs charging of the battery 207 on the basis of the DC voltage and the DC current from the power reception unit 203.

The authentication unit 208 performs interactive authentication with the second authentication unit 109 of the TX through communication performed by the communication unit 204. The memory 209 stores information indicating states of the constituents of the RX and the noncontact charging system and a state as a whole, or the like. A part of the memory 209 may be a secure element which is used when the TX authenticates the RX. The secure element is a generic name of semiconductor components having a security capability of resisting an analysis attack from the outside and includes a storage unit that can safely store data or an encryption logic circuit.

In the present disclosure, when the TX or the RX complies with a WPC standard including WPT authentication, this is expressed as "compliant with WPC standard version A" in the following description. For example, it is assumed that WPC standard version A is standard v1.3 which is a successor to WPC standard 1.2.2 and has at least a WPT authentication function added thereto.

In FIG. 3, the power reception unit 203, the authentication unit 208, the control unit 201, the memory 209, the communication unit 204, and the charging unit 206 are illustrated as individual block elements, but a plurality of block elements may be mounted in the same chip. One block element illustrated in FIG. 3 may be divided into a plurality of block elements or may be mounted as a plurality of chips.

In the noncontact charging system, the TX performs following authentication.
- Authentication that is performed by the first authentication unit 108 in cooperation with the AC adapter 301 and the USB cable 300 on the basis of a first communication protocol (for example, USB authentication using the USB cable).
- Authentication that is performed by the second authentication unit 109 in cooperation with the RX on the basis of a second communication protocol using media (for example, the power transmission coil 105 and the power reception coil 205) different from those of the first communication protocol.

In the present disclosure, for example, the AC adapter 301, the USB cable 300, and the TX (the power supply unit 102) are USB devices. These USB devices comply with USB authentication. When the USB authentication has succeeded, it can be guaranteed that there is a low likelihood that excessive heating or the like will occur even when power determined through the USB authentication is supplied to the USB devices. For example, it is assumed that the USB devices have succeeded in USB authentication and determined power has been supplied to the power supply unit 102 of the TX from the AC adapter 301 via the USB cable 300. In this case, the likelihood that excessive heating will occur in the power supply unit 102, the USB cable 300, and the AC adapter 301 is low.

On the other hand, when one or more of the power supply unit 102, the USB cable 300, and the AC adapter 301 do not comply with USB authentication, the USB authentication does not succeed. In this case, when power determined in the USB authentication standard is supplied to the USB devices, there is a likelihood that excessive heating or the like will occur in the devices or cable. Here, a device not complying with USB authentication includes a device complying with one of USB standards of a plurality of versions before the USB authentication standard has been established. In the present disclosure, a USB device complying with one of USB standards of a plurality of versions before the USB authentication standard has been established is referred to as a "legacy USB device."

When one or more of the power supply unit 102, the USB cable 300, and the AC adapter 301 have failed in USB authentication and power determined in the USB authentication standard has been supplied to the USB devices, there is a likelihood that heating or the like will occur. Here, a case in which the USB authentication has failed includes a case in which there is a likelihood that the USB cable 300 or the AC adapter 301 will be a USB device which nominally complies with the USB authentication but actually does not comply therewith.

It is assumed that the RX and the TX comply with the WPC standard version A and have succeeded in WPT authentication. In this case, even when the TX transmits predetermined power determined in the standard to the RX, there is a low likelihood that a problem such as excessive heating will occur. On the other hand, it is assumed that at least one of the TX and the RX does not comply with the WPC standard version A. In this case, when the TX transmits power determined in the standard to the RX, there is a likelihood that excessive heating or the like will occur in a device not complying with the WPC standard version A. The device not complying with the WPC standard version A includes a device complying with one of WPC standards of a plurality of versions before the WPC standard version A. In the present disclosure, the TX or the RX complying with one of the WPC standards of the plurality of versions before the WPC standard version A is referred to as a "legacy TX or RX."

As a case in which the TX and the RX have failed in WPT authentication, there is a case in which the TX or the RX nominally complies with the WPT authentication but actually does not comply therewith. In this case, since the TX and the RX have not succeeded in the WPT authentication, there is a likelihood that excessive heating or the like will occur when the TX transmits power determined in the standard to the RX. WPT authentication between devices complying with the WPT authentication succeeds necessarily.

In the system according to the present disclosure, when the USB cable 300 and the AC adapter 301 have succeeded in USB authentication and the RX and the TX have succeeded in WPT authentication therebetween, it is determined that predetermined power determined in the standard can be supplied. In this case, there is a low likelihood that excessive heating or the like will occur, and the power reception unit 203 of the RX can supply predetermined power (for example, 15 watts) to a load (the charging unit 206). It is assumed that the one or more of the power supply unit 102 of the TX, the USB cable 300, and the AC adapter 301 have not succeeded in USB authentication or the RX or the TX has not succeeded in WPT authentication. In this case, there is a likelihood that a problem will occur in supply of predetermined power determined in the standard. When the power reception unit 203 of the RX supplies a power of 15 watts to a load, excessive heating or the like may occur. In the following description, in order to avoid such a risk, control for limiting power to be supplied from the power reception unit 203 to a power value (for example, 5 watts or less) less than the predetermined power (15 watts) is performed when authentication has not succeeded.

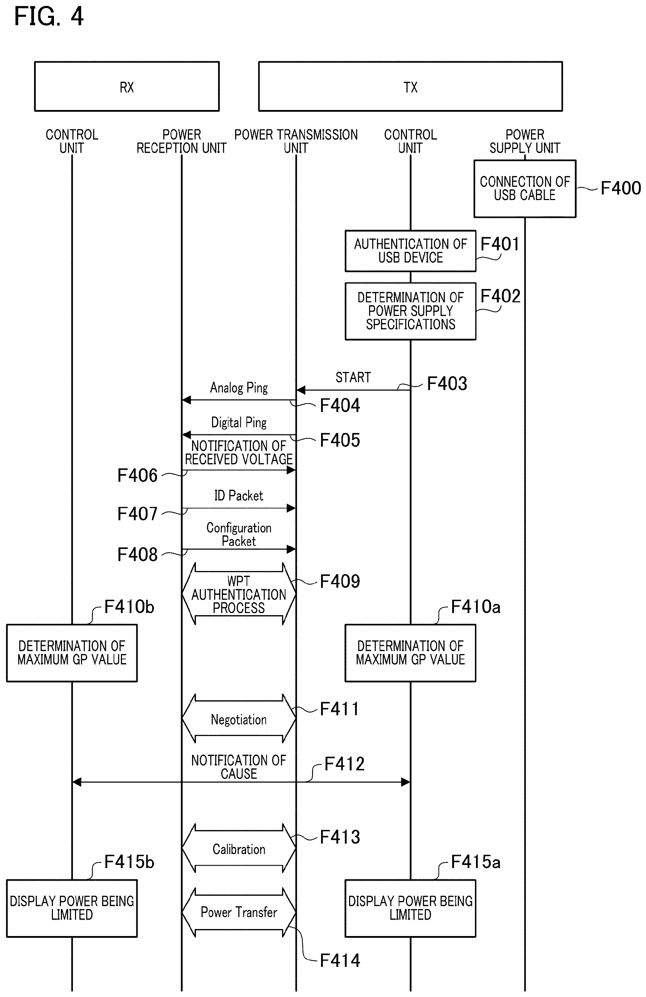

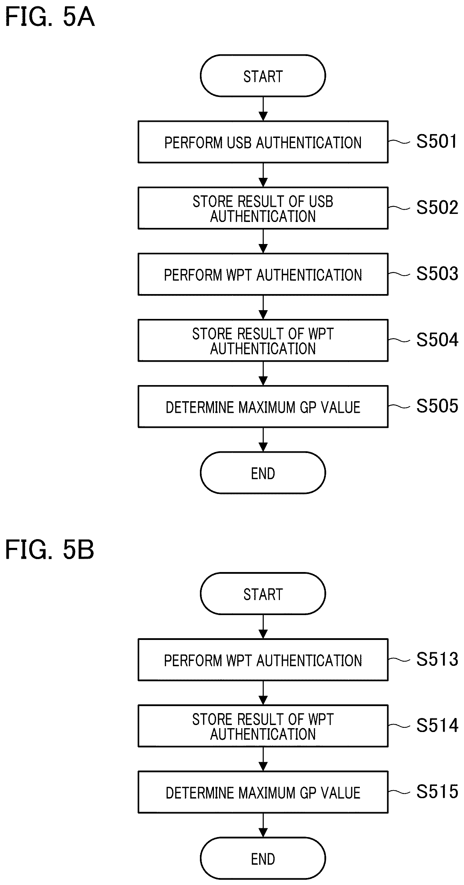

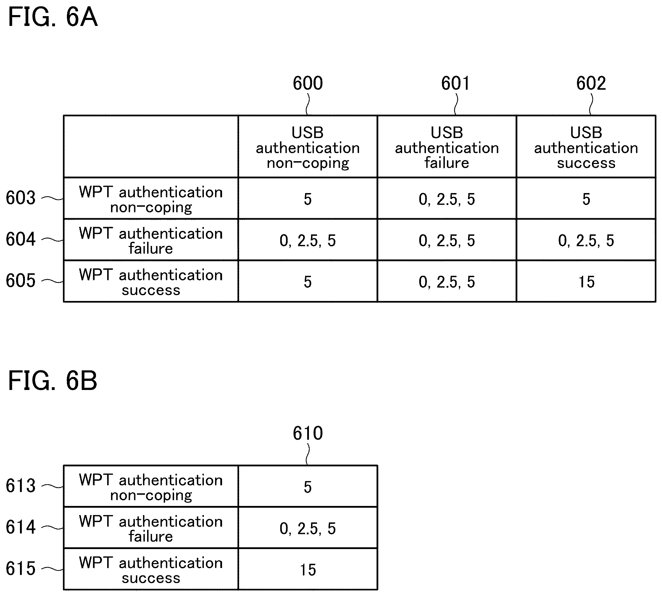

An example of a process flow performed in the system according to the present disclosure will be described below. FIG. 4 is a sequence diagram illustrating an example of processes including USB authentication and WPT authentication. FIG. 5 is a flowchart illustrating an example of a process flow that is performed by the TX and the RX. FIG. 5(A) illustrates an example of a process that is performed by the control unit 101 of the TX in association with setting of guaranteed power (which is hereinafter referred to as "GP" and a value of which is referred to as a GP value). FIG. 5(B) illustrates an example of a process that is performed by the control unit 201 of the RX in association with setting of the GP. FIG. 6 illustrates an example of a limit value of the GP used for negotiation which will be described later on the basis of the results of USB authentication and WPT authentication. This limit value corresponds to a maximum value (an upper limit) of the GP allowable.

GP which is determined through negotiation between the TX and the RX will be first described. The GP value is a power value that is guaranteed by the TX for output power to a load of the RX even when a positional relationship between the TX and the RX is shifted and power transmission efficiency between the power transmission coil 105 and the power reception coil 205 decreases. The load in the RX is a target to which power is supplied by the power reception unit 203 and includes the charging unit 206 illustrated in FIG. 3. For example, it is assumed that the GP value is 5 watts. Even when a positional relationship between the power transmission coil 105 and the power reception coil 205 is shifted and power transmission efficiency between the power transmission coil 105 and the power reception coil 205 decreases, the TX controls the power transmission unit 103 such that the power reception unit 203 can output power of 5 watts. In the present disclosure, the GP is limited according to the result of authentication. For example, when authentication has not succeeded or any does not comply with authentication, it is possible to curb excessive heating or the like due to transmission of power determined in the standard.

The limit value of GP used in negotiation will be described with reference to FIG. 6 prior to description with reference to FIGS. 4 and 5. FIG. 6(A) is a table illustrating the limit value of GP in the TX. FIG. 6(B) is a table illustrating the limit value of GP in the RX.

In FIG. 6(A), "USB authentication noncompliant," "USB authentication failure," and "USB authentication success" are shown in columns 600, 601, and 602. "USB authentication noncompliant" means that one of the USB devices does not comply with the USB authentication (but a device complying with the USB authentication has succeeded in authentication). The USB devices include the power supply unit 102 of the TX, the USB cable 300, and the AC adapter 301. "USB authentication failure" means that one of the USB devices nominally complies with the USB authentication but has failed in the USB authentication. "USB authentication success" means that all of the power supply unit 102 of the TX, the USB cable 300, and the AC adapter 301 have succeeded in the USB authentication. "WPT authentication noncompliant," "WPT authentication failure," and "WPT authentication success" are shown in rows 603, 604, and 605. "WPT authentication noncompliant" means that the RX does not comply with the WPT authentication. "WPT authentication failure" means that the RX complies with the WPT authentication but has failed in the WPT authentication. "WPT authentication success" means that the RX complies with the WPT authentication and has succeeded in the WPT authentication.

In FIG. 6(A), numerical values corresponding to the columns and the rows are GP values (unit: watt). These GP values are limit values of power. A field in which a plurality of numerical values are described in the table, for example, "0, 2.5, 5," means that setting for employing one of three types of GP values has been performed in advance. This is true in FIG. 6(B). In the example illustrated in FIG. 6(A), in the case of USB authentication noncompliant (column 600), it is possible to avoid excessive heating or the like by limiting the GP value to 5 regardless of the result of WPT authentication. Alternatively, in the case of WPT authentication failure (row 604) in the USB authentication noncompliant (column 600), it is also possible to limit the GP value to 0 (not transmit power) or 2.5 (less than 5 watts). In this case, in comparison with the WPT authentication noncompliant (row 603), the GP value is limited to a smaller value. This is because there is, for example, a likelihood that the RX nominally complies with the WPT authentication but does not comply with a regular standard or a likelihood that the RX will be a device (such a forgery) not satisfying the WPC standard in association with the WPT authentication failure. In order to curb excessive heating or the like, the GP value can be limited to 5. On the other hand, by limiting the GP value of the legacy RX not complying with the WPT authentication but complying with a regular standard to a lower value (0 or 2.5), it is possible to curb or avoid transmission of power to a forgery pretending to comply with the WPT authentication.

In the case of USB authentication failure (column 601) in FIG. 6(A), the GP value is limited to 5 or less regardless of the result of WPT authentication. In comparison with the USB authentication failure (column 600), the GP value may be limited to a smaller value. For example, the GP value corresponding to row 603 or row 605 can be limited to 0 (not transmit power) or 2.5 (less than 5 watts). This is because there is, for example, a likelihood that a USB device to be authenticated will be a forgery nominally complying with the USB authentication but not complying with a regular standard in association with the USB authentication failure. By limiting the GP value to a lower value (o or 2.5) in comparison with the legacy USB device not complying with the USB authentication but complying with a regular standard, it is possible to curb or avoid supply of power from a forgery pretending to comply with the USB authentication.

In the case of USB authentication success (column 602) in FIG. 6(A), there is a low likelihood that excessive heating or the like will occur even when the RX supplies 15 watts to the load in association with the power supply unit 102 of the TX, the USB cable 300, and the AC adapter 301. 15 watts is a power corresponding to the maximum value of the GP which the TX can supply to the RX. The TX sets the GP on the basis of a result of WPT authentication. For example, in the case of WPT authentication noncompliant (row 603), the TX limits the GP value to 5 for the aforementioned cause. In the case of WPT authentication failure (row 604), the TX can limit the GP value to a smaller value (0 or 2.5). In the case of USB authentication success (column 602) and WPT authentication success (row 605), the TX determines that there is a low likelihood that excessive heating or the like will occur. The TX sets 15 watts which is the maximum value of a power transmission capability of the TX and a power reception capability of the RX as the upper limit of the GP. Alternatively, the RX may request 15 watts which is the maximum value of a power transmission capability of the TX and a power reception capability of the RX as the GP from the TX.

In the present disclosure, an example of USB authentication will be described, but when USB authentication is not performed, data of column 602 in FIG. 6(A) may be used as a table for the limit value of the GP. In this case, USB authentication is not performed, but the USB authentication is considered as succeeding and the stored data is used to set the GP value.

Since no USB device is connected to power-supply circuits of the RX, the USB authentication is not performed. Accordingly, the limit value of the GP is determined on the basis of a result of WPT authentication in cooperation with the TX. "WPT authentication noncompliant," "WPT authentication failure," and "WPT authentication success" are shown in rows 613, 614, and 615 in FIG. 6(B). The limit values of the GP corresponding to rows 613 to 615 are shown in column 610. WPT authentication noncompliant (row 613) in FIG. 6(B) means that the TX does not comply with the WPT authentication. In this case, the upper limit of the GP is set to 5 due to the same cause as the TX. WPT authentication failure (row 604) means that the TX complies with the WPT authentication but has failed in the WPT authentication. In this case, the GP value is limited to 5 or a smaller value (0 or 2.5). WPT authentication success (row 605) means that the TX complies with the WPT authentication and has succeeded in the WPT authentication. In this case, the RX determines that there is no risk of excessive heating or the like and sets 15 watts which is the maximum value of the capability of the TX and the RX as the maximum value (the upper limit) of the GP.

As described above, the TX determines the upper limit of the GP which is allowable as a transmitted power value in negotiation in a negotiation phase on the basis of the USB authentication result and the WPT authentication result and the information illustrated in FIG. 6(A). The RX determines the maximum value of the GP to be requested from the TX in negotiation in the negotiation phase on the basis of the WPT authentication result and the information illustrated in FIG. 6(B). When both the USB authentication and the WPT authentication have succeeded, transmitted power corresponding to the maximum capability of the TX and the RX can be determined in negotiation in the negotiation phase.

A process flow from start of a system to transmission of power will be described below with reference to FIG. 4. When it is determined that the devices to be authenticated in the WPT authentication include any device not complying with the authentication or having failed in the authentication, the RX operates such that high power is not requested as a GP value from the TX. The operations of the power transmission unit 103, the control unit 101, and the power supply unit 102 of the TX are illustrated in the right part of FIG. 4, and the operations of the control unit 201 and the power reception unit 203 of the RX are illustrated in the left part. In F400, the AC adapter 301 is connected to the power supply unit 102 via the USB cable 300. In F401, the control unit 101 of the TX performs USB authentication for the USB devices connected thereto. The control unit 101 operates the first authentication unit 108. The USB devices to be authenticated are the USB cable 300 and the AC adapter 301. The first authentication unit 108 determines whether the USB devices comply with the USB authentication.

The first authentication unit 108 performs the USB authentication for all the USB devices and determines "USB authentication success" when the USB authentication for all the USB devices has succeeded. When the USB authentication for any USB device has not succeeded, the first authentication unit 108 determines "USB authentication noncompliant" or "USB authentication failure." The first authentication unit 108 determines "USB authentication failure" when there is even one device complying with the USB authentication but having failed in the authentication. The first authentication unit 108 determines "USB authentication noncompliant" when all the devices not having succeeded in the USB authentication do not comply with the USB authentication. The first authentication unit 108 may determine "USB authentication failure" or "USB authentication noncompliant" on the basis of attributes of the devices having failed in authentication. For example, when there is a device having failed in authentication, the first authentication unit 108 can identify attributes of the device and perform determination based on the attributes.

For example, it is assumed that the USB authentication for the AC adapter 301 has succeeded but the USB cable 300 does not comply with the USB authentication. In this case, the first authentication unit 108 determines "USB authentication noncompliant." When the USB authentication for the AC adapter 301 has succeeded but the USB cable 300 complies with the USB authentication but has failed in authentication, the first authentication unit 108 determines "USB authentication failure." When both the AC adapter 301 and the USB cable 300 have succeeded in the USB authentication, the first authentication unit 108 determines "USB authentication success." The control unit 101 performs a process of storing information of the USB authentication result in the memory 107.

In F402 of FIG. 4, the control unit 101 determines power supply specifications of a voltage and a current supplied from the AC adapter 301 on the basis of a sequence of the USB power-delivery standard. Since the source voltage of the power supply unit 102 is determined according to an internal configuration of the TX, the current value is determined in this case. For example, it is assumed that the source voltage is set to 15 V and the output current of the power supply unit 102 is set to a maximum 3 A. The control unit 101 of the TX determines a decrease width of a current value on the basis of the information illustrated in FIG. 6(A) when the current value is decreased. For example, the maximum value of the GP which is allowable at the time of power transmission is determined to be 5 watts in negotiation in the negotiation phase of the WPC standard on the basis of data of the USB authentication noncompliant (column 600). The control unit 101 determines the current value in consideration of a power loss in the TX. For example, system efficiency when the RX outputs 5 W (watts) as the GP is set to 50% when the positional relationship between the power transmission coil 105 and the power reception coil 205 changes and inter-coil efficiency is minimized. In this case, power which the power supply unit 102 supplies to the power transmission unit 103 or the control unit 101 is 10 W (5 W×2). When the source voltage is 15 V, the output current is 10 W/15 V≈0.67 A. In the present disclosure, it is assumed that the GP value is limited to 5 when the USB device does not comply with the USB authentication. Accordingly, the current value which is determined by the power supply unit 102 through negotiation with the AC adapter 301 on the basis of the sequence of the USB power-delivery standard is about 0.67 A. On the basis of the determined current value, the control unit 101 of the TX determines power supply specifications along with the AC adapter 301. On the other hand, when the USB authentication has succeeded, 2.0 A (15 W×/15 V) is determined as the power supply specifications to comply with the GP value of 15 watts which is the maximum value of the capability of the TX and the RX.

In F403 of FIG. 4, the control unit 101 of the TX starts the power transmission unit 103. For example, so-called power-on reset of supplying power from the power supply unit 102 to one or more of the control unit 101, the power transmission unit 103, and the communication unit 104 is performed. Alternatively, the first authentication unit 108 inputs a LOW signal (about 0 V) to one or more of the control unit 101, the power transmission unit 103, and the communication unit 104 of the TX, whereby one of these functional units may be reset. In this case, the first authentication unit 108 releases the reset by transmitting a HI signal (such as 3.3 V) to the corresponding constituent unit after the power supply specifications have been determined and the GP value has been set.

When the power transmission unit 103 starts, the TX starts an operation based on the WPC standard. In the present disclosure, an authentication phase is defined as a phase in which WPT authentication is performed in addition to the phase based on the WPC standard. In the authentication phase, the TX and the RX perform authentication based on the WPT authentication. When the TX and the RX comply with the authentication phase, the TX and the RX perform a process in a selection phase. The TX and the RX transition to a ping phase and an identification & configuration phase (hereinafter referred to as an "I & C phase") and then transition to the authentication phase. Subsequently to the authentication phase, processes in the phases are performed in the order of a negotiation phase, a calibration phase, and a power transfer phase (hereinafter referred to as a "PT phase").

In the selection phase of F404 in FIG. 4, the power transmission unit 103 transmits an analog ping (hereinafter referred to as an AP) via the power transmission coil 105. An AP is a signal having small power for detecting an object present near the power transmission coil 105. The TX detects a voltage value or a current value of the power transmission coil 105 at the time of transmission of the AP and determines that there is an object when the detected voltage value is less than a threshold value or the detected current value is larger than a threshold value. In the ping phase of F405, the TX transmits a digital ping (hereinafter referred to as a DP). Power of the DP is power which is higher than the power of the AP and which is sufficient for the control unit 201 of the RX near the power transmission coil 105 to start. When the control unit 201 of the RX is started by the DP received via the power reception coil 205, the control unit 201 notifies the TX of the magnitude of the received voltage in F406 and transitions to the I & C phase. On the other hand, when the TX is notified of the received voltage value by the RX, the TX transitions to the I & C phase.

In the I & C phase, the RX transmits an identification packet (ID packet) to the TX in F407 and transmits a configuration packet to the TX in F408. The TX returns an acknowledge (ACK) in response to the configuration packet transmitted from the RX. When the I & C phase ends, the TX and the RX can transmit data to each other. Then, the TX and the RX transition to the authentication phase.

In F409 of FIG. 4, transmission and reception of power for the WPT authentication are performed between the power transmission unit 103 of the TX and the power reception unit 203 of the RX. The second authentication unit 109 of the TX and the authentication unit 208 of the RX perform a WPT authentication process in the authentication phase. An authentication target of the TX is the RX which is a power reception device in the noncontact charging system. An authentication target of the RX is the TX which is a power transmission device in the noncontact charging system. Details of the authentication phase will be described later.

The control unit 101 of the TX stores information of the WPT authentication result in the memory 107. The control unit 201 of the RX stores information of the WPT authentication result in the memory 209. In F410a, the control unit 101 of the TX determines a maximum value of the GP to be used in the negotiation phase on the basis of the information of the USB authentication result and the WPT authentication result stored in the memory 107 and the information illustrated in FIG. 6(A). On the other hand, in F410b, the control unit 201 of the RX determines a maximum value of the GP to be used in the negotiation phase on the basis of the information of the WPT authentication stored in the memory 209 and the information illustrated in FIG. 6(B).

Thereafter, in F411, the control unit 101 of the TX and the control unit 201 of the RX perform negotiation in the negotiation phase and determine the GP. Negotiation of transmitted power is performed on the basis of authentication results from the first authentication unit 108 (USB authentication) and the second authentication unit 109 (WPT authentication) of the TX and the authentication unit 208 (WPT authentication) of the RX. Through this negotiation, the transmitted power becomes equal to or less than power allowed by the limited GP value (F410a and F410b). For example, in the case of "WPT authentication success" (FIG. 6(B): row 615) in the RX, the GP is allowed up to 15 watts. On the other hand, in the case of "WPT authentication failure" (FIG. 6(B): row 614), the GP is limited to equal to or less than 5 watts. In the negotiation phase, the control unit 201 of the RX requests the GP from the TX.

In the TX, in the case of "USB authentication success" (FIG. 6(A): column 602) and "WPT authentication success" (FIG. 6(A): row 605), the GP is allowed up to 15 watts. On the other hand, in the case of "USB authentication noncompliant" (FIG. 6(A): column 600), the GP is limited to equal to or less than 5 watts. In the negotiation phase, when GP higher than 5 watts has been requested by the control unit 201 of the RX, the control unit 101 of the TX returns to a negative response NAK in response to the request. On the other hand, when GP equal to or lower than the limit value has been requested by the RX, the control unit 101 of the TX transmits an acknowledge (ACK) which is a positive response.

As described above, the maximum value of the GP is determined on the basis of the USB authentication result and the WPT authentication results from both the TX and the RX. When one of a plurality of authentications has failed, the GP value is limited, and thus excessive heating or the like can be prevented. Only when all of the authentications have succeeded, the control unit 101 of the TX can set the GP value to the maximum value of the capability of the power transmission unit 103. When USB authentication is not performed, the maximum value of the GP is determined on the basis of the WPT authentication results from both the TX and the RX. In this case, "USB authentication success" (FIG. 6(A): column 602) is determined on the basis of the WPT authentication result for the RX from the TX, and the GP is limited according to necessity.

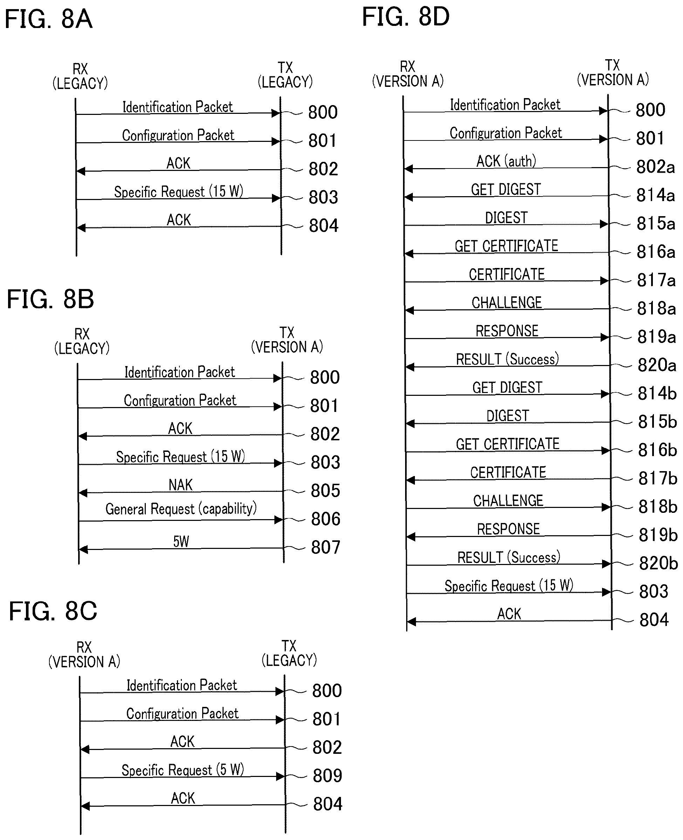

Subsequently, in F412 of FIG. 4, the TX and the RX notify each of a cause the GP has been limited. The control unit 101 of the TX notifies the control unit 201 of the RX of the cause the GP has been limited, and the control unit 201 acquires the authentication results from the first authentication unit 108 and the second authentication unit 109. The control unit 201 of the RX notifies the control unit 101 of the TX of a cause the GP has been limited, and the control unit 101 acquires the authentication result from the authentication unit 208. This notification of the causes may be performed using a RESULT packet (820a and 820b in FIG. 8(D)) which will be described later.

An example of a process of notifying of a cause GP has been limited will be described below. The control unit 101 of the TX adds the information of the WPT authentication result and the USB authentication result associated with the power supply unit 102 of the TX to the RESULT packet and transmits the RESULT packet to the control unit 201 of the RX. For example, the control unit 101 provides 1 bit for storing information of a WPT authentication result in the RESULT packet. The information of 1 bit is "1" when the WPT authentication has succeeded and is "0" when the WPT authentication has failed. The control unit 101 of the TX provides 1 bit for storing the USB authentication results of the AC adapter 301 and the USB cable 300 in the RESULT packet. The information of 1 bit is "1" when all the USB authentications have succeeded and is "0" when any of the USB authentications has failed. The control unit 101 transmits the RESULT packet in which the authentication results are stored.

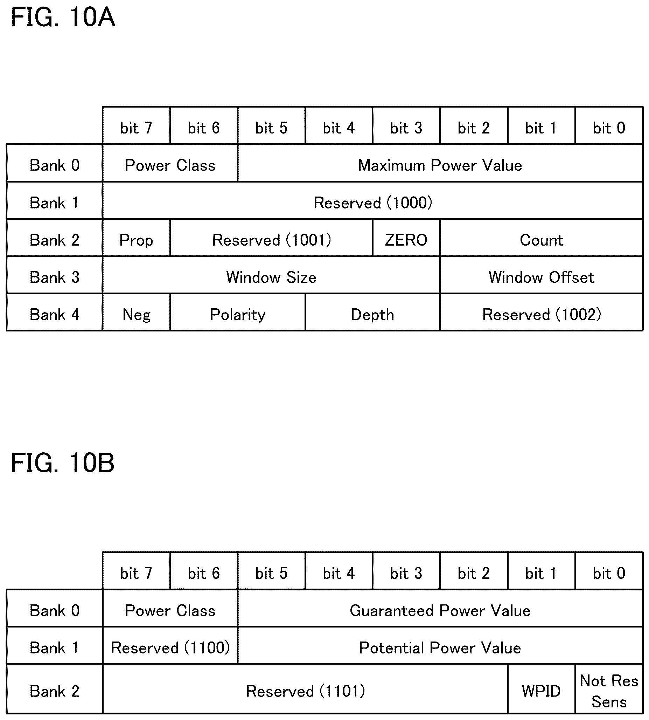

The USB authentication result transmitted from the TX to the RX is transmitted, for example, using a power transmitter capability packet of WPC standard v1.2.2 as illustrated in FIG. 10(B). In FIG. 10(B), bit6 or bit7 (1100) of Bank1 or bit2 to bit7 (1101) of Bank2 which are marked with "Reserved" can be used to transmit the USB authentication result. The TX adds information indicating one of "have a function of notifying of a USB authentication result," "USB authentication has been completed," and "USB authentication result" to the corresponding area and transmits the packet.

The control unit 201 of the RX adds the WPT authentication result to the RESULT packet and transmits the packet to the control unit 101 of the TX. For example, the control unit 201 provides 1 bit for storing the WPT authentication result in the RESULT packet. Information of 1 bit is "1" when the WPT authentication has succeeded and is "0" when the WPT authentication has failed.

Thereafter, in F413, the control unit 101 of the TX and the control unit 201 of the RX perform processes in the calibration phase between the power transmission unit 103 and the power reception unit 203. Then, in F414, the operation transitions to the PT phase. In the PT phase, power transfer from the TX to the RX is performed. The RX supplies power to a load on the basis of power received from the TX. In F415b, the control unit 201 of the RX displays power being limited on the display unit 202 on the basis of the cause notification in F412. In F415a, the control unit 101 of the TX displays power being limited on the display unit 106 on the basis of the cause notification in F412. For example, "since USB authentication has not succeeded (due to the USB device), slow charging is being performed" is displayed on the basis of the bit indicating the USB authentication result or the WPT authentication result in the cause notification (such as the RESULT packet). Alternatively, when the GP is determined to be 0 watts as a result of negotiation (when power is not transmitted), "since USB authentication has not succeeded (due to the USB device), charging is not performed" is displayed. A user can see this displayed information and recognize that a longer time is required than that when power is not limited. The user can replace the USB cable or the USB adapter with a product complying with the USB authentication. Information mentioned about the WPT authentication result may be provided in the displayed details. In this case, the same effects as described above are obtained.

When transmitted power is not limited as a result of negotiation, "fast charging is being performed" or the like is displayed. When transmitted power is limited, when transmitted power is not limited, and when charging is not performed, display may be performed in different colors or lighting patterns of an LED. Alternatively, a user may be notified using different sounds or vibrations in those cases.

In the present disclosure, an example in which the TX is started (F403) after USB authentication (F401) has been performed is described. The present disclosure is not limited thereto, and the USB devices and the noncontact charging system may be simultaneously started and the USB authentication and the WPT authentication may be asynchronously performed. In this case, when it is determined that transmitted power is limited through the USB authentication after the TX has started power transmission, the same effects as the example of the present disclosure are obtained by limiting the transmitted power of the noncontact charging system through negotiation again. As in the present disclosure, it is possible to expect new effects by employing the configuration in which the TX is started for WPT authentication after it has been determined that transmitted power is to be limited through USB authentication. At a time point at which the TX determines the GP in the negotiation phase of F411, whether to limit the transmitted power is determined already in the USB authentication. Accordingly, since the process in the negotiation phase does not need to be performed again, it is possible to simplify the processes.

An example of a process that is performed by the control unit 101 of the TX for setting the GP will be described below with reference to FIG. 5(A). The process is started after the USB cable 300 and the AC adapter 301 have been connected to the power supply unit 102 of the TX. In S501, the control unit 101 of the TX performs a USB authentication process. The USB authentication process is performed on all the USB devices (the USB cable 300 and the AC adapter 301) to be authenticated by the first authentication unit 108. In S502, the control unit 101 stores information indicating the USB authentication result in the memory 107. Then, in S503, the control unit 101 performs a WPT authentication process. Then, in S504, the control unit 101 stores information indicating the WPT authentication result in the memory 107. In S505, the control unit 101 determines a maximum value of the GP to be used in the negotiation phase on the basis of the information indicating the USB authentication result and the WPT authentication result stored in the memory 107 and the information illustrated in FIG. 6(A). Then, this series of processes end.

An example of a process that is performed by the control unit 201 of the RX for setting the GP will be described below with reference to FIG. 5(B). After the process has started, the control unit 201 performs the WPT authentication process in S513. The WPT authentication process in the authentication phase is performed by the authentication unit 208 of the RX. An authentication target of the RX is the TX which is a power transmission device in the noncontact charging system. In S514, the control unit 201 stores information indicating the WPT authentication result in the memory 209. Then, in S515, the control unit 201 determines a maximum value of the GP to be used in the negotiation phase on the basis of the WPT authentication result stored in the memory 209 in S514 and the information illustrated in FIG. 6(B). Then, this series of processes end.

Operations and backward compatibility of the WPT authentication will be described below. When higher power is transmitted on the basis of the WPC standard, definitions of a WPT authentication function for avoiding excessive heating or the like may be added to the WPC standard in the related art. It is important that a TX having the WPT authentication function can comply with an RX having the same WPT authentication function and secure backward compatibility with a legacy RX. It is important that an RX having the WPT authentication function secures backward compatibility with a legacy TX. Hereinafter, a method which is based on a legacy WPC standard and in consideration of backward compatibility in addition to the WPT authentication function will be described.

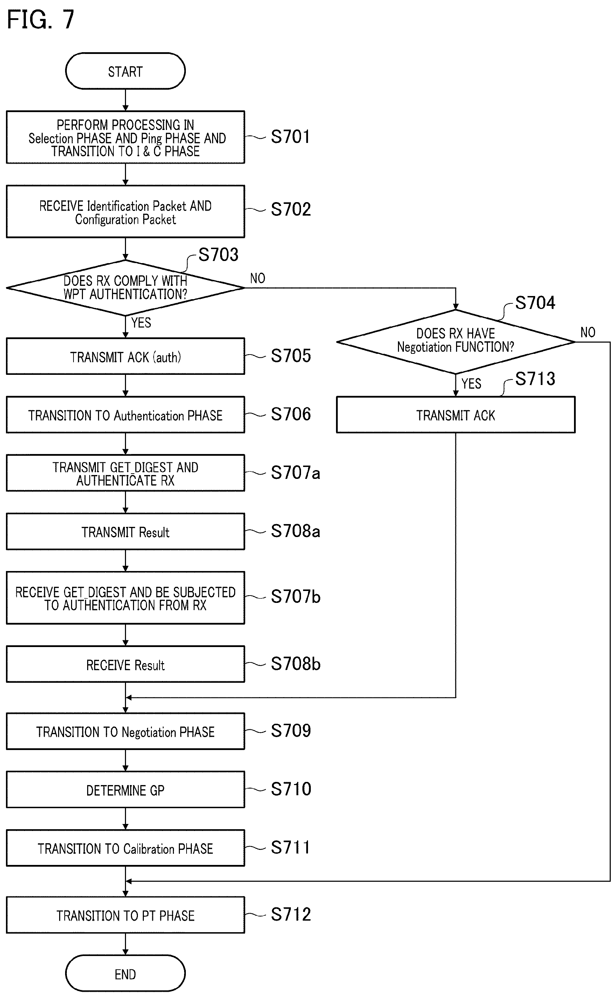

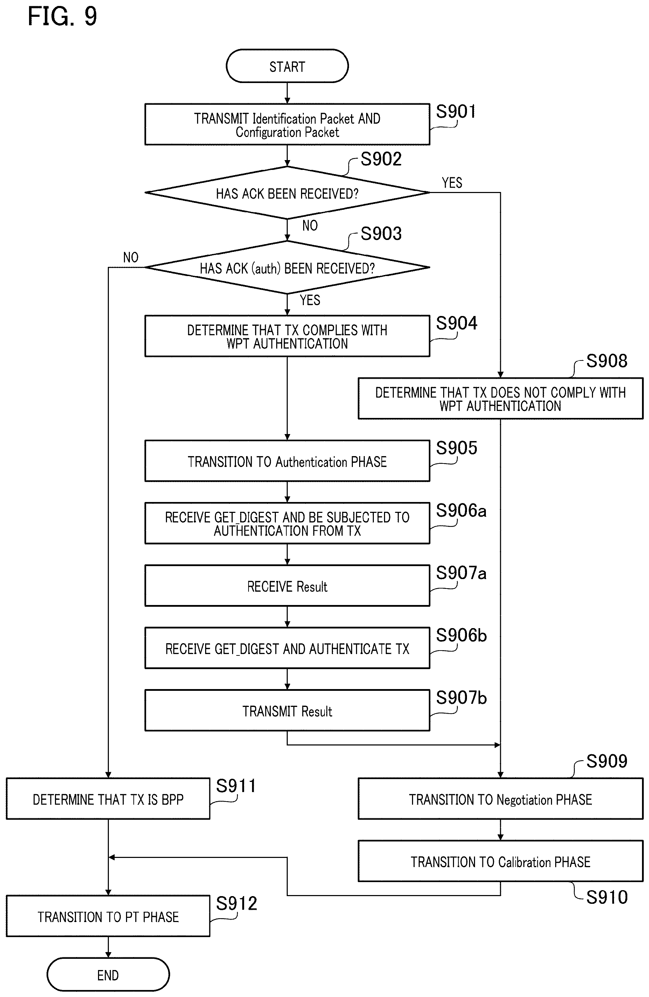

FIG. 7 is a flowchart illustrating an example of a process that is performed by the control unit 101 of the TX. FIG. 8 is a sequence diagram illustrating backward compatibility of a version-A or legacy TX or RX. FIG. 9 is a flowchart illustrating an example of the process that is performed by the control unit 201 of the RX. FIG. 10(A) illustrates a bit configuration of a configuration packet based on the WPC standard. Areas of Power class and Maximum Power Value in Bank0, a reserved area (1000) in Bank1, a reserved area (1001) in Bank2, a reserved area (1002) in Bank4, and the like are provided. FIG. 10(B) illustrates a bit configuration of a power transmitter capability packet based on the WPC standard v1.2.2. Areas of Power class and Guaranteed Power Value in Bank0, a reserved area (1100) in Bank1, a reserved area (1101) in Bank2, and the like are provided. The reserved areas (1100 and 1101) can be used to transmit a USB authentication result.

In the present disclosure, the WPT authentication is described as being a challenge-response type authentication using an electronic certificate similarly to the USB authentication, but the present disclosure is not limited thereto. The TX operates an initiator that transmits challenge text to the RX, and the RX operates as a responder that encrypts the challenge text and transmits the encrypted challenge text to the TX. Similarly, when the RX operates as an initiator that transmits challenge text to the TX, the TX operates as a responder that encrypts the challenge text and transmits the encrypted challenge text to the RX. Here, an initiator is a device that performs the WPT authentication, and a responder is a device that is subjected to the WPT authentication.

Categories of a TX and an RX based on the WPC standard v1.2.2 will be described prior to description of the process flows. The TX and the RX are categorized as follows according to the magnitude of GP.
- TX and RX of which the GP is a maximum 5 W (watt): Basic Power Profile (hereinafter referred to as BPP).
- TX and RX in a range of "5 W<GP≤15 W": Extended Power Profile (hereinafter referred to as EPP).

In the WPC standard v1.2.2, a negotiation function between a TX and an RX in association with GP is added, and a TX and an RX of EPP have the negotiation function. A TX and an RX of BPP are additionally categorized into a type complying with the negotiation function and a type not complying with the negotiation function.

The TX can determine whether the RX has the negotiation function using the configuration packet (see FIG. 10(A)). Setting information of the RX is stored in the packet, and the negotiation function can be determined using a value of Neg bit (Bank4, bit7) thereof. Details thereof are as follows.
- When Neg bit is "1": The RX has the negotiation function.
- When Neg bit is "0": The RX does not have the negotiation function.

In the present disclosure, unless otherwise mentioned, it is assumed that a legacy TX and a legacy RX have the negotiation function and a negotiation process is performed in the negotiation phase.

Regarding a TX and an RX complying with WPC standard version A corresponding to the WPT authentication, it is important that the legacy RX and the legacy TX complying with WPC standard v1.2.2 have backward compatibility. The TX (or RX) complying with WPC standard version A needs to operate to be compatible with an RX (or TX) complying with the WPC standard prior to version A.

An example in which a TX and an RX complying with WPC standard version A have backward compatibility with WPC standard v1.2.2 will be described with reference to FIGS. 7 to 9. It is assumed that a TX and an RX comply with legacy EPP of WPC standard v1.2.2. In this case, the statuses of the TX and the RX transition in the order of the selection phase, the ping phase, the I & C phase, the negotiation phase, the calibration phase, and the PT phase. It is assumed that a legacy TX or RX is a BPP device not having the negotiation function. In this case, the statuses of the TX and the RX transition in the order of the selection phase, the ping phase, the I & C phase, and the PT phase.

It is assumed that both a TX and an RX comply with the authentication phase. In this case, the statuses of the TX and the RX transition in the order of the selection phase, the ping phase, the I & C phase, and the authentication phase. Subsequently to the authentication phase, the statuses transition in the order of the negotiation phase, the calibration phase, and the PT phase.

The authentication phase is executed, for example, prior to the negotiation phase. This is because the GP value changes according to the WPT authentication result as described above with reference to FIG. 6. It is assumed that the TX and the RX determine the GP through negotiation in the negotiation phase and then the status transitions to the authentication phase. The determined GP can be reset according to a result in the authentication phase. That is, after the GP has been determined, the GP may need to be decreased in order to avoid or curb excessive heating or the like according to the WPT authentication result. When resetting (changing) of the GP is performed, there is a likelihood that a process sequence (a protocol) until transitioning to the PT phase will be complicated or a time required for the processes will be extended. On the other hand, prior to the negotiation phase, the authentication phase is performed. Accordingly, the GP can be determined in the negotiation phase on the basis of the premise of the GP limited in the authentication phase. In this way, by limiting the GP in the authentication phase prior to the negotiation phase, resetting of the GP does not occur until transitioning to the PT phase, and thus it is possible to quickly transition to the PT phase.

In v1.3 of the WPC standard, when the GP set as the capability information of the TX in the authentication phase is discriminated from the GP in another phase, the GP is referred to as negotiable load power (hereinafter abbreviated to NLP). The NLP is a maximum GP value which is negotiable between the TX and the RX in the negotiation phase subsequent to the authentication phase.

A processing example in WPC standard v1.2.2 when both the TX and the RX comply with legacy EPP will be described with reference to FIGS. 7, 8(A), and 9. In the following description, it is assumed that the USB authentication of the TX for the USB cable 300 and the AC adapter 301 has succeeded. In this processing example, only parts associated with the legacy EPP in the flowcharts of FIGS. 7 and 9 are performed. That is, since the processes of S703 to S708b in FIG. 7 are not performed by the legacy TX, the processes of Steps S701, S702, and S704 and Steps S709 to S713 will be described. Since the processes of Steps S903 to S907b and Step S908 in FIG. 9 are not performed by the legacy RX, the processes of Steps S901 and S902 and Steps S909 to S912 will be described. Only a sequence subsequent to the I & C phase associated with backward compatibility is illustrated in FIG. 8(A).

In S701 of FIG. 7, the status transitions to the I & C phase after the processes in the selection phase and the ping phase have been performed between the TX and the RX. In S702, the TX receives an identification packet (ID packet) and a configuration packet from the RX. An arrow 800 illustrated in FIG. 8(A) indicates that the legacy RX transmits an ID packet to the legacy TX. The ID packet stores information indicating the corresponding version of the WPC standard (v1.2.2 in this case) in addition to individual identification information of the RX itself. An arrow 801 in FIG. 8(A) indicates that the legacy RX transmits a configuration packet of WPC standard v1.2.2 to the legacy TX. The packet includes the following information.
- A maximum power value which the RX can supply to a load.
- Information of a Neg bit which is a bit indicating whether the RX has a negotiation function.

The legacy TX does not perform the process of S703 and performs the process of S704 corresponding to the negative determination result (NO) in S703. In S704, the TX determines whether the RX has the negotiation function. When it is determined that the RX has the negotiation function (YES in S704), the TX performs the process of S713. When it is determined that the RX does not have the negotiation function (NO in S704), the TX performs the process of S712.

In S713, the TX transmits an ACK in response to the configuration packet from the RX. An arrow 802 in FIG. 8(A) indicates that the legacy TX transmits an ACK to the legacy RX. The process flow proceeds to S709 subsequent to S713, and the status transitions to the negotiation phase. Then, the TX determines the GP in S710, and then the status transitions to the calibration phase in S711. In the calibration phase, the TX adjusts power transmitted from the TX to the RX on the basis of a correlation between a value measured in the TX and a value of received power measured in the RX. Then, the status transitions to the PT phase in S712.

When the determination result of S704 is NO, that is, when the RX is BPP (in which the value of Neg bit is 0) not complying with the negotiation function, the process flow proceeds to S712. In this case, the TX does not transmit an ACK to the RX, and the status transitions to the PT phase. When the TX is BPP and does not comply with the negotiation function, the TX does not transmit an ACK to the RX, and the status transitions to the PT phase. In this case, the GP is limited to 5 watts. Subsequently to S712, the TX ends this series of processes.

On the other hand, in S901 of FIG. 9, the RX transmits an ID packet to the TX (FIG. 8(A): 800). Subsequently, the RX transmits a configuration packet to the TX (FIG. 8(A): 801). The configuration packet of WPC standard v1.2.2 includes information of the Neg bit. The RX sets the Neg bit to "1." "1" indicates that the RX has the negotiation function. Subsequently to S901, the process flow proceeds to the process of S902.

In S902, the RX determines whether an ACK (FIG. 8(A): 802) in response to the configuration packet has been received from the TX. When an ACK has been received (YES in S902), the RX determines that the TX complies with the negotiation function. Since the process of S908 is not performed as described above, the process flow proceeds from S902 to S909, and the status transitions to the negotiation phase. The RX transmits a specific request packet for requesting power (for example, 15 watts) required for the RX to the TX. An arrow 803 in FIG. 8(A) indicates that the RX transmits a "specific request (15 W)" to the TX. This packet is a specific request packet including information indicating that the RX requests 15 watts as the GP from the TX.

On the other hand, it is assumed in S902 that the RX of WPC standard v1.2.2 has not received an ACK within a predetermined time from the time point at which the configuration packet has been transmitted (NO in S902). For example, the predetermined time is 15 milliseconds (ms). In this case, as described above, the process of S903 is not performed, and the process flow proceeds to the process of S911, where the RX determines that the TX is BPP not having the negotiation function. Then, after the status has transitioned to the PT phase in S912, the RX ends this series of processes.

When the specific request (15 W) indicated by the arrow 803 in FIG. 8(A) is received from the RX, the TX compares the requested power (15 W) with a power transmission capability of the TX. When it is determined that the power requested by the RX can be transmitted, the TX transmits a positive response ACK to the RX. When it is determined that the power requested by the RX cannot be transmitted, the TX transmits a negative response NAK to the RX. An arrow 804 in FIG. 8(A) indicates that the TX determines that 15 watts can be transmitted, determines the GP to be 15 watts (FIG. 7: S710), and transmits an ACK to the RX.

The status of the TX transitions to the calibration phase (FIG. 7: S711). When an ACK in response to the specific request transmitted to the TX is received from the TX, the RX causes the process flow to proceed from S909 to S910. In S910, the status transitions to the calibration phase. After processing in the calibration phase has been performed, the process flow proceeds to S912, the status transitions to the PT phase, and wireless power transfer from the TX to the RX is started.

As described above, the TX of WPC standard v1.2.2 determines which of EPP or BPP having the negotiation function and BPP not having the negotiation function the RX is on the basis of the information of the Neg bit. When the RX is EPP or BPP having the negotiation function, the TX performs transition of the status to the negotiation phase, performs negotiation associated with transmitted power, and then starts power transmission. On the other hand, when the RX is BPP not having the negotiation function, the TX does not perform transition to the negotiation phase but performs transition to the PT phase and transmits relatively lower power to the RX. It is assumed that the RX of WPC standard v1.2.2 has received an ACK within the predetermined time from the time point at which the configuration packet has been transmitted. In this case, the status transitions to the negotiation phase, and the status transitions to the PT phase when the RX has not received an ACK within the predetermined time. Through the aforementioned operation, compatibility between a TX and an RX having the negotiation function and a TX and an RX not having the negotiation function in WPC standard v1.2.2 is secured.

An example of a process flow when the TX complies with version A and the RX is a legacy will be described below with reference to FIGS. 6(A), 7, 8(B), and 10(A). In the following description, it is assumed that the USB authentication for the USB cable 300 and the AC adapter 301 performed by the TX has succeeded. Since the whole following description is associated with backward compatibility of the WPC standard, the technique described below can be applied to a configuration in which the TX does not include the first authentication unit 108.

Prior to description of the process flows, an Auth bit in the configuration packet is defined. FIG. 10(A) illustrates a configuration of the configuration packet of WPC standard v1.2.2. Description of parts not associated with description of the present disclosure will be omitted.

The configuration packet illustrated in FIG. 10(A) includes a plurality of reserved areas. A reserved area 1000 of bit0 to bit7 in Bank1, a reserved area 1001 of bit4 to bit6 in Bank2, and a reserved area 1002 of bit0 to bit2 in Bank4 are provided. In the present disclosure, an Auth bit is disposed in bit6 of Bank2, but the present disclosure is not limited to this example, and the Auth bit may be disposed in another reserved area. In WPC standard v1.2.2, all bit values of the reserved areas are "0." The RX stores "1" in the Auth bit when the RX complies with the WPT authentication and stores "0" in the Auth bit when the RX does not comply with the WPT authentication. A position at which the value of the Auth bit is stored is the position of the reserved bit. Accordingly, even an RX complying with an older-generation standard in which it is not recognized that the value of the Auth bit is stored at that position can store the value "0" at that position.

When the process flow proceeds from S702 to S703 in FIG. 7, the TX acquires the value of the Auth bit in the configuration packet and determines whether the RX complies with the WPT authentication. Since the value of the Auth bit in the legacy RX is "0," the TX determines that the RX does not comply with the WPT authentication (NO in S703), and the process flow proceeds to the process of S704. In S704, the TX determines whether the RX has the negotiation function. When it is determined that the RX has the negotiation function (YES in S704), the process flow proceeds to the process of S713. In S713, the TX transmits an ACK in response to the configuration packet, and the status transitions to the negotiation phase in S709. An arrow 802 in FIG. 8(B) indicates that the TX transmits an ACK to the RX. An arrow 803 in FIG. 8(B) indicates that the RX transmits a specific request (15 W) to the TX. When a request for 15 watts as the GP has been received from the RX, the TX transmits a negative response NAK for rejecting the request to the RX as indicated by an arrow 805. This is because the RX does not comply with the WPT authentication and thus the TX determines that 15 watts is not to be transmitted in order to curb or prevent excessive heating or the like in the RX.

When the request has been rejected by the NAK, the RX transmits a general request defined in WPC standard v1.2.2 in order to ascertain a GP value which can be set by the TX. In the present disclosure, a message for requesting a transmitter capability packet in the general request is referred to as a general request (capability). An arrow 806 in FIG. 8(B) indicates that the RX transmits the request to the TX. The TX receives the general request (capability). The TX stores information indicating 5 watts in a guaranteed power value of the power transmitter capability packet and transmits the packet to the RX. The transmitter capability packet is a packet which includes information of the maximum GP value allowable in negotiation and which is defined in WPC standard v1.2.2. An arrow 807 in FIG. 8(B) indicates that the TX transmits the packet to the RX. The value of 5 watts is a maximum GP value allowable at the time of power transmission and is determined on the basis of the information illustrated in FIG. 6(A). That is, this is a value corresponding to WPT authentication noncompliant (row 603) and USB authentication success (column 602).

When the RX does not have the negotiation function (NO in S704 of FIG. 7), the TX does not transmit an ACK, and the status transitions to the PT phase in S712. In this case, the GP is limited to 5 watts. The RX is a legacy device, and thus when the RX has the negotiation function (YES in S704 of FIG. 7), the processes of S709 to S711 are performed similarly to the case in which the TX and the RX are legacy devices.

As described above, the TX complying with WPC standard version A can operate to be compatible with the legacy RX complying with the WPC standard prior to version A using the Auth bit defined in FIG. 10(A).

A case in which both a TX and an RX comply with version A will be described below with reference to FIG. 6, 7, 8(D), and 9. Both the TX and the RX comply with the WPT authentication process. In the following description, it is assumed that the USB authentication for the USB cable 300 and the AC adapter 301 performed by the TX has succeeded. Operations of the TX and the RX in version A corresponding to WPT authentication will be first described.

In S901 of FIG. 9, the RX of version A transmits a configuration packet in which "1" is stored in the Auth bit to the TX. An arrow 801 in FIG. 8(D) indicates that the RX transmits the packet to the TX. On the other hand, in S703 of FIG. 7, the TX of version A acquires the value of the Auth bit of the configuration packet. When it is determined that the RX complies with the WPT authentication (YES in S703), the TX performs the process of S705.

In S705 of FIG. 7, the TX transmits a predetermined positive response (hereinafter referred to as an ACK(auth)) to the RX. The ACK(auth) is different from a normal ACK, is an acknowledge in response to a configuration packet constituted in another different bit pattern, and is a packet indicating that the TX complies with the WPT authentication. An arrow 802a in FIG. 8(D) indicates that the TX transmits the ACK(auth) to the RX.

After the TX has transmitted the ACK(auth), the status transitions to the authentication phase in S706. On the other hand, when it is determined in S902 of FIG. 9 that an ACK has not been received (NO in S902), the RX performs the process of S903. In S903, the RX determines whether an ACK(auth) instead of an ACK has been received. When it is determined that an ACK(auth) has been received (YES in S903), the RX performs the process of S904.

In S904, the RX determines that the TX complies with the WPT authentication. In S905, the status of the RX transitions to the authentication phase. Arrows 814a to 820a and arrows 814b to 820b in FIG. 8(D) indicate examples of the WPT authentication. In S706 of FIG. 7, the status of the TX transitions to the authentication phase. In S707a, the TX transmits a GET_DIGEST packet to the RX. The GET_DIGEST packet is a packet for requesting information on an electronic certificate owned by the RX. An arrow 814a in FIG. 8(D) indicates that the TX transmits the packet to the RX.

Subsequently to S905 of FIG. 9, the RX performs the processes of S906a, S907a, S906b, and S907b. In S906a, the RX receives the GET_DIGEST packet and is subjected to authentication by the TX. An arrow 815a in FIG. 8(D) indicates that the RX transmits a DIGEST in response to the GET_DIGEST packet. The DIGEST is information on an electronic certificate owned by the RX. Subsequently, the TX transmits a GET_CETTIFICATE packet for requesting detailed information on the electronic certificate to the RX as indicated by an arrow 816a. As indicated by an arrow 817a, the RX transmits CERTIFICATE in response to the GET_CETTIFICATE packet.

Then, as indicated by an arrow 818a, the TX transmits a CHALLENGE message including challenge text to the RX. An arrow 819a indicates that the RX transmits a RESPONSE in which challenge text has been encrypted to the TX. When validity of the RESPONSE has been ascertained, the TX transmits a RESULT(success) to the RX in S708a of FIG. 7. An arrow 820a in FIG. 8(D) indicates that the TX transmits the RESULT(success) to the RX.

In S907a of FIG. 9, the RX receives the RESULT(success). Information of the RESULT(success) means that the WPT authentication has succeeded as a result of the RESPONSE. When the authentication has failed as a result of the RESPONSE, the TX transmits RESULT(fail) indicating that the authentication has failed to the RX. In S906b of FIG. 9, the RX transmits a GET_DIGEST packet to the TX. An arrow 814b in FIG. 8(D) indicates that the RX transmits the GET_DIGEST packet to the TX.

In S707b of FIG. 7, the TX receives the GET_DIGEST packet and is subjected to authentication performed by the RX. The GET_DIGEST packet is a packet for requesting information on an electronic certificate owned by the TX. An arrow 815b in FIG. 8(D) indicates that the TX transmits a DIGEST to the RX in response to the GET_DIGEST packet. The DIGEST is information on the electronic certificate owned by the TX.

Subsequently, as indicated by an arrow 816b in FIG. 8(D), the RX transmits a GET_CETTIFICATE packet for requesting detailed information on the electronic certificate to the TX. An arrow 817b indicates that the TX transmits a CERTIFICATE in response to the GET_CETTIFICATE packet. Then, as indicated by an arrow 818b in FIG. 8(D), the RX transmits a CHALLENGE message including challenge text to the TX. An arrow 819b indicates that the TX transmits a RESPONSE in which the challenge text has been encrypted to the RX. When validity of the RESPONSE has been ascertained, the RX transmits a RESULT(success) to the TX in S907b of FIG. 9. An arrow 820b in FIG. 8(D) indicates that the RX transmits the RESULT(success) to the TX. In S708b of FIG. 7, the TX receives the RESULT(success) from the RX. Then, the process flow proceeds to the process of S709.

After the TX and the RX have transmitted and received the RESULT(success) or the RESULT(fail), the status transitions to the negotiation phase (S709, S909). When the USB authentication and the WPT authentication have succeeded, the TX determines that 15 watts corresponding to WPT authentication success (row 605) and USB authentication success (column 602) is a maximum GP value allowable on the basis of the information illustrated in FIG. 6(A) and performs the negotiation process. On the other hand, the RX determines that 15 watts corresponding to WPT authentication success (row 615) is the maximum GP value allowable on the basis of the information illustrated in FIG. 6(B) and performs the negotiation process. An arrow 803 in FIG. 8(D) indicates that the RX requests the TX to transmit 15 watts as the power value of the GP. The TX determines that the power value of GP at the time of negotiation is 15 watts. An arrow 804 indicates that the TX transmits an ACK for accepting the request from the RX to the RX.

When the TX has failed in USB authentication or WPT authentication, the TX determines the maximum GP value allowable in the negotiation phase on the basis of the information illustrated in FIG. 6(A). When the RX has failed in WPT authentication, the RX determines the maximum GP value allowable in the negotiation phase on the basis of the information illustrated in FIG. 6(B). Alternatively, when a RESULT(fail) has been received from the RX, the TX may determine that power is not to be transmitted. When a RESULT(fail) has been received from the TX, the RX may determine that power transmission is not to be requested.

With the aforementioned configuration, it is possible to determine control details of power transmission or power reception with higher accuracy and to achieve an effect of enhancing security. The TX according to the present disclosure operates to be compatible with an RX complying with version A in addition to an RX complying with the WPC standard prior to version A.

In the authentication phase, the TX first authenticates validity of the RX and then the RX authenticates validity of the TX, but the order may be reversed. When the RX first authenticates the TX and then the TX authenticates the RX, the order of the operations of the arrows 814a to 820a and the operations of the arrows 814b to 820b in FIG. 8(D) are reversed. In FIG. 7, the processes of S707a and S708a are performed subsequently to the processes of S707b and S708b. In addition, the processes of S906a and S907a in FIG. 9 are performed subsequently to the processes of S906b and S907b.

The sequence in which the TX and the RX perform authentication may be determined in advance or may not be determined in advance. In order to perform correct authentication in the authentication phase, it is preferable that an initiator and a responder perform the following processes after transmitting a GET_DIGEST packet.
- The initiator withholds or stops responding even when a GET_DIGEST packet is received from another device until transmitting a RESULT(success) or a RESULT(fail) to the responder.
- The responder does not transmit a GET_DIGEST packet until receiving a RESULT(success) or a RESULT(fail).

Here, a time interval from the GET_DIGEST packet (FIG. 8(D): 814a, 814b) to the RESULT(success) packet (FIG. 8(D): 820a, 820b) will be described complementally. Regarding a response to the TX to a packet from the RX, for example, a time from the rear end of the received packet to the front end of the response packet to be transmitted is defined to be less than 10 ms in the negotiation phase of WPC standard v1.2.2. An initiator of the authentication phase needs to perform encryption and decryption to ascertain the validity of packets (DIGEST, CERTIFICATE, and RESPONSE) associated with an electronic certificate transmitted from a responder. Accordingly, a time is required for responding in the authentication phase. Therefore, in the authentication phase, a response time longer than a response time defined in other phases is provided. In the present disclosure, this response time is set to 50 ms. The response time in FIG. 8(D) is a time from DIGEST to GET_CETTIFICATE, a time from GET_CETTIFICATE to CHALLENGE, and a time from RESPONSE to RESULT(success). By extending the response time, the control unit 101 of the TX does not have operate at a high speed, and thus it is possible to realize a decrease in power consumption of the control unit 101 or a decrease in cost due to use of a low-speed CPU.

The TX determines whether the RX complies with WPT authentication using information (value) of the Auth bit of the configuration packet. The present disclosure is not limited to this example, and the TX can determine whether the RX complies with WPT authentication using version information of an ID packet. The TX can determine that the RX complies with WPT authentication when the version information indicates version A (or a version subsequent thereto) and determine that the RX does not comply with WPT authentication when the version information indicates a version prior to version A.

When the TX has received a packet other than a predetermined packet from the RX in the authentication phase, the power transmission unit 103 may stop power transmission and the status may transition to the selection phase. By stopping power transmission when the TX has received a packet other than a predetermined packet due to failure of the RX or the like, it is possible to prevent an unexpected operation of the system. The predetermined packet includes packets indicated by the arrows 814a to 820a and the arrows 814b to 820b in FIG. 8(D). That is, the predetermined packet includes GET _DIGEST, DIGEST, GET_CERTIFICATE, CERTIFICATE, CHALLENGE, RESPONSE, and RESULT. A packet other than the predetermined packet is, for example, as follows.
- A signal strength packet indicating a voltage value of a received voltage.
- A control error packet for requesting an increase/decrease of a voltage value.
- An identification packet (ID packet).
- A configuration packet.

The TX or the RX may store a result of operation as an initiator (that is, ascertainment of validity of a responder) and identification information of a responder (such as a device ID, a manufacturer ID, and information on a certificate) in a nonvolatile memory. In addition, the TX and the RX may store only identification information of a responder failed in authentication in the nonvolatile memory. The TX or the RX may perform WPT authentication using the identification information of a responder failed in authentication and stored in the nonvolatile memory. For example, when the TX or the RX performs authentication as an initiator, it is possible to determine validity of a device to be authenticated by comparing an identification number stored in the nonvolatile memory with an identification number of the device.

A case in which a TX is a legacy device and an RX complies with version A will be described below with reference to FIGS. 6, 7, 8(C), and 9. In the following description, it is assumed that USB authentication for the USB cable 300 and the AC adapter 301 performed by the TX has succeeded. In S901 of FIG. 9, the RX notifies the TX that the RX complies with WPT authentication by transmitting a configuration packet (FIG. 8(C): 801). However, since the TX is a legacy device, the Auth bit is ignored. Since the RX of version A complies with the negotiation function, the process flow proceeds from S704 to S713 in FIG. 7 (YES in S704). The TX transmits an ACK in S713, and the status transitions to the negotiation phase in S709.

When the RX receives an ACK from the TX (FIG. 8(C): 802), the process flow proceeds from S902 to S908 in FIG. 9 (YES in S902). In S908, the RX determines that the TX does not comply with WPT authentication. This is because the RX complies with WPT authentication and thus receives an ACK(auth) instead of an ACK when the TX complies with WPT authentication. Then, in S909, the RX transitions to the negotiation phase.

When the RX has not received an ACK within 15 ms from the time point at which the configuration packet has been transmitted (NO in S902) and has not received an ACK(auth) (NO in S903), the process flow proceeds to the process of S911. In S911, the RX determines that the TX is BPP and does not comply with the negotiation function, and then the status transitions to the PT phase in S912.

The RX determines that the RX is to perform negotiation for GP in the negotiation phase and is not to receive a power of 15 watts in order to avoid a risk of excessive heating or the like on the basis of the information described above with reference to FIG. 6(B). Then, the RX determines that the RX is to perform negotiation with 5 watts as the GP. 5 watts is power corresponding to WPT authentication noncompliant (row 603) and USB authentication success (column 602). As indicated by an arrow 809 in FIG. 8(C), the RX transmits a specific request (5 W) to the TX. An arrow 804 indicates that the RX receives an ACK transmitted from the TX. When the negotiation phase ends in S909, the status transitions to the calibration phase in S910, the RX performs processes required for calibration, and the status transitions to the PT phase in S912.

As described above, the RX complying with WPC standard version A can operate to be compatible with the TX complying with the WPC standard prior to version A.

In the noncontact charging system according to the present disclosure, authentication using a USB protocol is performed between a power supply device (the AC adapter 301) which is a power supply and a power transmission device, and authentication using a WPC protocol is performed between the power transmission device and a power reception device. A control unit of the power transmission device controls transmitted power on the basis of a USB authentication result and a WPC authentication result. Accordingly, in a wireless power transfer system that can perform processing based on a plurality of types of authentication protocols, it is possible to effectively use a plurality of authentication results. As a result, for example, it is possible to realize appropriate power transmission control with a low likelihood that excessive heating or the like will occur in devices provided in a power supply path.

### [Modified Examples]

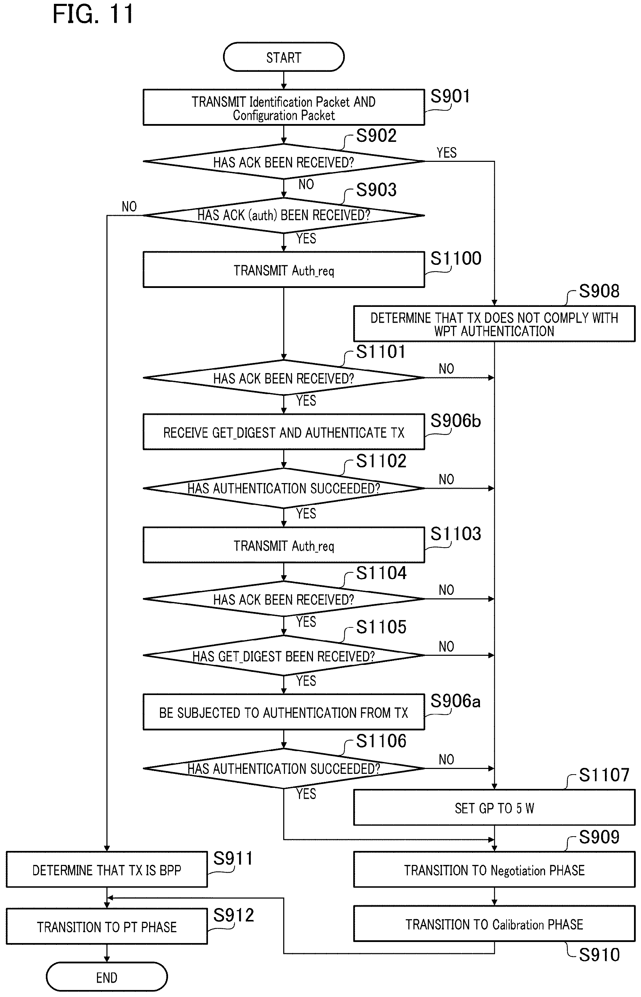

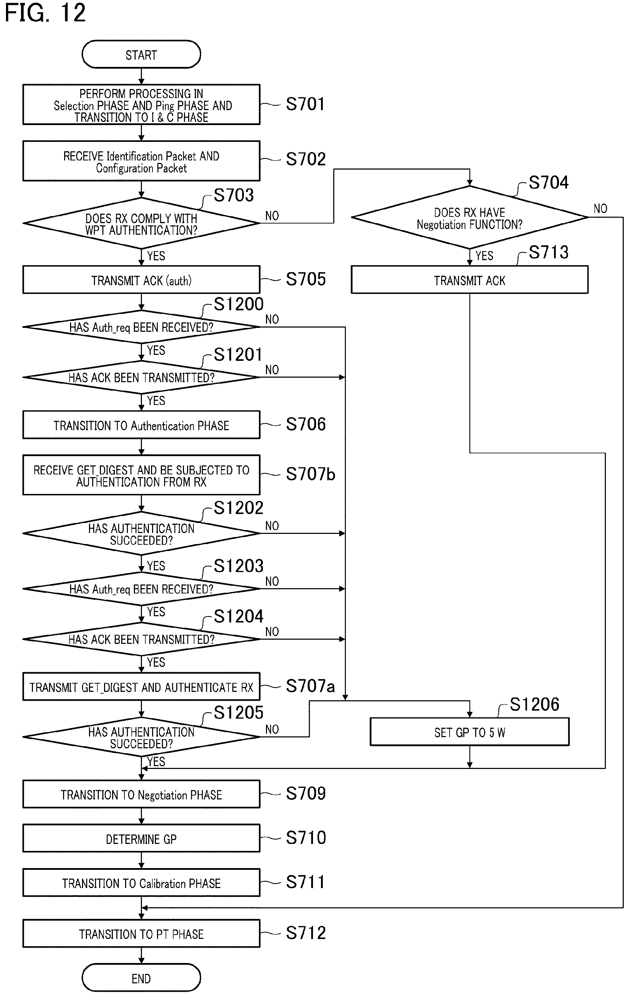

In the aforementioned system type, an example in which a TX and an RX perform WPT authentication in the authentication phase has been described. In the following description, system types according to modified examples will be described with reference to FIGS. 11 and 12. The same details as described above will be referred to by the same reference signs or symbols as used above, and detailed description thereof will be omitted. This omission is employed in description of embodiments which will be described later.

In a modified example, when one WPT authentication which is performed earlier out of WPT authentications performed by a TX and an RX has not succeeded, it is assumed that GP is determined without performing the other WPT authentication which will be performed later. According to this modified example, it is possible to shorten a process time in the authentication phase and to quickly determine the GP.

In a modified example, the control unit 101 of the TX determines control details of power transmission on the basis of a result of the WPT authentication which has been performed earlier out of the WPT authentications performed by the TX and the RX. For example, the control details of power transmission are whether the TX is to transmit power or a maximum value of a power value which is allowable when the TX transmits power. On the other hand, the control unit 201 of the RX determines control details of power reception on the basis of a result of the WPT authentication which has been performed earlier out of the WPT authentications performed by the TX and the RX. For example, the control details of power reception are whether the RX is to receive power or a maximum value of a power value which is required for the TX when the RX receives power. In this modified example, a case in which the power reception device first operates an initiator and authenticates validity of the power transmission device has been described, but the same effects are obtained even when the power transmission device first operates as an initiator and authenticates validity of the power reception device.

FIG. 11 is a flowchart illustrating a process flow up to power transfer that is performed by the control unit of the power reception device (RX). FIG. 12 is a flowchart illustrating a process flow up to power transfer that is performed by the control unit of the power transmission device (TX). In the following description, it is assumed that both the TX and the RX comply with version A in order to focus on processes in the authentication phase.

In FIG. 11, the processes of S1100 to S1107 which are different from those in FIG. 9 will be mainly described. In S901, the RX of version A transmits a configuration packet in which "1" is stored in the Auth bit to the TX. When an ACK(auth) has been received (YES in S903), the RX determines that the TX complies with WPT authentication, and the process flow proceeds to the process of S1100. The method of allowing the RX to determine whether the TX complies with WPT authentication may be a method of acquiring version information in addition to the method of receiving the ACK(auth). In S1100, the RX transmits an Auth_request (hereinafter referred to as "Auth_req") to the TX within a predetermined time. Auth_req is a packet indicating an intention that an authentication process with the RX as an initiator and with the TX as a responder which is a destination starts. Subsequently to S1100, the process flow proceeds to the process of S1101.

In S1101, the RX determines whether an ACK has been received from the TX. The process flow proceeds to the process of S906b when it is determined that the RX has received an ACK (YES in S1101), and the process flow proceeds to the process of S1107 when it is determined that the RX has not received an ACK (NO in S1101). In S906b, the RX transmits GET_DIGEST to the TX within a predetermined time and authenticates validity of the TX. Subsequently, in S1102, the RX determines whether the WPT authentication has succeeded. The process flow proceeds to the process of S1103 when it is determined that the WPT authentication has succeeded (YES in S1102), and the process flow proceeds to the process of S1107 when it is determined that the WPT authentication has not succeeded (NO in S1102). When it is determined that the TX complies with the WPT authentication, the RX transmits RESULT(success) to the TX. In S1103, the RX transmits Auth_req for inquiring about whether the TX is to perform WPT authentication for the RX to the TX within a predetermined time after RESULT(success) has been transmitted. Since the TX has an initiator function, the TX transmits an ACK to the RX within a predetermined time after Auth_req has been received. In S1104, the RX determines whether an ACK has been received from the TX. The process flow proceeds to the process of S1105 when it is determined that an ACK has been received by the RX (YES in S1104), and the process flow proceeds to the process of S1107 when it is determined that an ACK has not been received (NO in S1104).

In S1105, the RX determines whether GET_DIGEST has been received from the TX. When it is determined that GET_DIGEST has been received (YES in S1105), the process flow proceeds to the process of S906a, and the RX is subjected to authentication performed by the TX. When it is determined that GET_DIGEST has not been received (NO in S1105), the RX causes the process flow to proceed to the process of S1107. In S1106 subsequent to S906a, the RX receives the WPT authentication result and determines whether the WPT authentication has succeeded. When it is determined that the WPT authentication has succeeded (YES in S1106), the status transitions to the negotiation phase in S909. In this case, since the validity of the TX has been authenticated (YES in S1102), the RX requests the GP of a maximum 15 watts as a specific request to the TX on the basis of the information illustrated in FIG. 6(B). That is, the control unit 201 of the RX determines a maximum value of a power value requested for the TX as control details of power reception on the basis of the WPT authentication results from the TX and the RX. On the other hand, when it is determined that the WPT authentication has not succeeded (NO in S1106), the process flow proceeds to the process of S1107.

In S1107, the RX limits the GP to 5 watts. The control unit 201 of the RX determines the power value requested from the RX to the TX as the control details of power reception on the basis of the WPT authentication result performed earlier. In S909 subsequent to S1107, the status transitions to the negotiation phase.

The processes of S1200 to S1206 in FIG. 12 which are different from FIG. 7 will be mainly described below. When it is determined that the RX complies with WPT authentication on the basis of the Auth bit of the configuration packet (YES in S703), the TX of version A transmits ACK(auth) to the RX in S705. The RX transmits Auth_req to the TX within a predetermined time after ACK(auth) has been received (FIG. 11: S1100).

The TX determines whether Auth_req has been received from the RX within a predetermined time in S1200 after ACK(auth) has been transmitted in S705. The process flow proceeds to the process of S1201 when it is determined that Auth_req has been received from the RX by the TX (YES in S1200), and the process flow proceeds to the process of S1206 when it is determined that Auth_req has not been received from the RX (NO in S1200). The TX can recognize that the WPT authentication has started by receiving Auth_req.

When Auth_req has been received (YES in S1200), the TX determines whether the TX can operate as a responder to perform WPT authentication. Specifically, the control unit 101 of the TX performs this determination from a load state. More specifically, the following determination process is performed.
- A process of determining whether the control unit 101 has capability of controlling the second authentication unit 109.
- A process of determining whether another control unit (not illustrated) connected to the RX has capability of controlling the second authentication unit 109 when the second authentication unit 109 is controlled by the other control unit.

The TX performs the determination process within a predetermined time after Auth_req has been received and transmits an ACK to the RX in response to Auth_req when it is determined that the TX can be authenticated as a responder.

In S1201, the TX determines whether an ACK has been transmitted to the RX. When the TX determines that an ACK has been transmitted to the RX (YES in S1201), the status transitions to the authentication phase in S706. In this case, when an ACK has been received (FIG. 11: YES in S1101), the RX transmits GET_DIGEST to the TX within a predetermined time after the ACK has been received and authenticates the validity of the TX (FIG. 11: S906b). When the TX determines that an ACK has not been transmitted to the RX (NO in S1201), the process flow proceeds to the process of S1206. Subsequently to S706, in S707b, the TX receives GET_DIGEST and is subjected to authentication from the RX.

When the WPT authentication has succeeded (FIG. 11: YES in S1102) and it is determined that the TX complies with the WPT authentication, the RX transmits RESULT(success) to the TX. The TX can ascertain that the authentication has succeeded by receiving RESULT(success) from the RX. In this case, the TX waits for a predetermined time until Auth_req for inquiring about whether the TX is to perform an authentication process with the TX as an initiator and with the RX as a responder is transmitted from the RX. The RX transmits Auth_req for inquiring about whether the TX is to perform WPT authentication for the RX from the TX to the TX within a predetermined time after RESULT(success) has been transmitted (FIG. 11: S1103).

Subsequently to S707b, the process flow proceeds to S1202. The TX determines whether the WPT authentication for the TX from the RX has succeeded. When it is determined that the WPT authentication for the TX has succeeded (YES in S1202), the process flow proceeds to the process of S1203. When it is determined that the WPT authentication for the TX has not succeeded (NO in S1202), the process flow proceeds to the process of S1206. In S1203, the TX determines whether Auth_req has been received from the RX within a predetermined time. When the TX determines that Auth_req has been received from the RX (YES in S1203), the process flow proceeds to the process of S1204. When the TX determines that Auth_req has not been received from the RX (NO in S1203), the process flow proceeds to the process of S1206. Since the TX has an initiator function, the TX transmits an ACK to the RX within a predetermined time after Auth_req has been received.

In S1204, the TX determines whether an ACK has been transmitted to the RX. When the TX determines that an ACK has been transmitted to the RX (YES in S1204), the process flow proceeds to the process of S707a. The RX receives the ACK (FIG. 11: YES in S1104). When the TX determines that an ACK has not been transmitted to the RX (NO in S1204), the process flow proceeds to the process of S1206.

In S707a, the TX transmits GET_DIGEST to the RX within a predetermined time after the ACK has been transmitted and starts the WPT authentication for the RX. The RX receives GET_DIGEST, and authentication is started by the TX (FIG. 11: YES in S1105, S906a). Then, in S1205, the TX determines whether the WPT authentication for the RX has succeeded. When it is determined that the WPT authentication for the RX has succeeded (YES in S1205), the TX transmits RESULT(success) to the RX, and the status transitions to the negotiation phase in S709. In this case, since the TX also authenticates the validity of the RX, the GP of a maximum 15 watts is allowed on the basis of the information illustrated in FIG. 6(A). On the other hand, the RX receives the WPT authentication result from the RX, and the status transitions to the negotiation phase when the authentication has succeeded (FIG. 11: YES in S1106) (S909). Since the RX authenticates the validity of the TX (FIG. 11: YES in S1102), the RX requires the GP of a maximum 15 watts from the TX using a specific request on the basis of the information illustrated in FIG. 6(B). In this way, the control unit 101 of the TX and the control unit 201 of the RX determine maximum values of a transmitted power value allowable to the RX and a power value required from the TX at the time of power transmission as control details of power transmission and power reception on the basis of the WPT authentication results from the TX and the RX.

In S1206, the TX limits the GP to 5 watts. Then, in S709, the status transitions to the negotiation phase. An example in which the RX and the TX limit the GP to predetermined power (5 watts) has been described above, the present disclosure is not limited thereto and it is possible to curb or prevent excessive heating or the like using another method. Specifically, when the WPT authentication has not succeeded, control details of power reception determined by the RX are as follows.
- The RX requires a smaller power value from the TX than that when the WPT authentications of the TX and the RX have succeeded.
- The RX does not receive power from the TX (for example, the RX requires the TX to stop power transmission).

The RX transmits a packet to the TX to stop power transmission and does not require power. Alternatively, the RX cuts off a current path which is not illustrated in the power reception coil 205 such that power is not received from the TX.

When the WPT authentication has not succeeded, the control details of power transmission determined by the TX are as follows.
- The maximum value of allowable power transmitted to the RX is set to a smaller value by the TX than that when the WPT authentications of the TX and the RX have succeeded.
- The TX stops power transmission to the RX.

As illustrated in FIGS. 11 and 12, when authentication has not succeeded through the WPT authentication process (S707b, S906b) which has been performed earlier, the WPT authentication process (S707a, S906a) to be performed later is not performed. Specifically, the control unit 201 of the RX does not transmit Auth_req in S1103 such that the TX does not have an opportunity to operate as an initiator. This is because, since the RX has not succeeded in authentication with the RX as an initiator, the RX determines the required GP to be 5 watts (see FIG. 6(B)) and this determination is not changed regardless of whether the TX has succeeded in authentication with the TX as an initiator. Accordingly, it is possible to shorten the process time in the authentication phase and to quickly transition to the negotiation phase.

The case in which the RX has not succeeded in WPT authentication is as follows.
- A case in which the validity of the TX cannot be authenticated in the WPT authentication process with the RX as an initiator, that is, the authentication has failed (NO in S1102).
- A case in which the TX cannot cause the second authentication unit 109 to operate and thus a negative response NAK is transmitted in response to Auth_req (NO in S1101, NO in S1201).
- A case in which an ACK has not been received from the TX within a predetermined time after the RX has transmitted Auth_req (NO in S1201).
- A case in which an expected packet has not been received from the TX within a predetermined time after the RX has transmitted the following packet in the WPT authentication process. Specifically, the RX may not receive a DIGEST packet in response to the transmitted GET_DIGEST packet or may receive another packet. The RX may not receive a CERTIFICATE packet in response to the GET_CERTIFICATE packet or may receive another packet. The RX may not receive a RESPONSE packet in response to the transmitted CHALLENGE packet or may receive another packet.

On the other hand, when it is determined that the TX has not succeeded in WPT authentication, the control unit 101 does not transmit GET_DIGEST to the RX. That is, the TX does not transmit a packet associated with the WPT authentication process to the RX.

The case in which it is determined that the TX has not succeeded in WPT authentication includes the following cases.
- A case in which the TX has not received Auth_req within a predetermined time (NO in S1200) after an ACK(auth) has been transmitted (S705).
- A case in which the TX has not transmitted an ACK within a predetermined time (NO in S1201) after Auth_req has been received (YES in S1200).
- A case in which the TX has not received an expected packet from the RX within a predetermined time after the following packet has been transmitted in the WPT authentication process. Specifically, after an ACK has been transmitted (YES in S1201), the TX may not receive a GET_DIGEST packet or may receive another packet. After a DIGEST packet has been transmitted, the TX may not receive a GET_CERTIFICATE packet or may receive another packet. After a CERTIFICATE packet has been transmitted, the TX may not receive a CHALLENGE packet or may receive another packet. After a RESPONSE packet has been transmitted, the TX may not receive a RESULT packet or may receive another packet.
- A case in which the WPT authentication with the RX as an initiator has not succeeded (NO in S1201). The case in which the WPT authentication has not succeeded includes a case in which the TX has not received a RESULT(success) packet within a predetermined time after the RESPONSE packet has been transmitted.
- A case in which the TX has received a RESULT(fail) packet indicating that the WPT authentication has failed.

Similarly, in the process of S707a (S906a), when the authentication for the RX with the TX as an initiator has not succeeded (NO in S1205, NO in S1106), the following processes are performed.
- The RX requests a smaller power value as the GP from the TX in comparison with the case in which the WPT authentications for the TX and the RX in the negotiation phase have succeeded.
- The RX requests the TX to stop power transmission or does not request power.

On the other hand, the TX determines a process of allowing a smaller power value as the GP, stopping power transmission to the RX, or the like in comparison with the case in which the WPT authentications for the TX and the RX in the negotiation phase have succeeded. The RX determines the GP to be 5 watts in S1107 of FIG. 11, and the TX determines the GP to be 5 watts in S1206 of FIG. 12,

The case in which the RX has not succeeded in WPT authentication is as follows.
- A case in which the RX has not received an ACK from the TX within a predetermined time after Auth_req has been transmitted in S1103 (NO in S1104).
- A case in which the RX has not received GET_DIGEST with a predetermined time (NO in S1105) after an ACK has been received (YES in S1104).
- A case in which an expected packet has not been received from the TX within a predetermined time after the RX has transmitted the following packet in the WPT authentication process. Specifically, after a DIGEST packet has been transmitted, the RX may not receive a GET_CERTIFICATE packet or may receive another packet. After a CERTIFICATE packet has been transmitted, the RX may not receive a CHALLENGE packet or may receive another packet. After a RESPONSE packet has been transmitted, the RX may not receive a RESULT packet or may receive another packet.

The case in which it is determined that the TX has not succeeded in WPT authentication includes the following cases.
- A case in which the TX has not received Auth_req within a predetermined time after a RESULT(success) packet has been received (NO in S1203).
- A case in which the TX has not transmitted an ACK within a predetermined time in response to Auth_req (NO in S1204) or has transmitted NAK indicates that the second authentication unit 109 cannot operate.
- A case in which the TX has not received an expected packet from the RX within a predetermined time after the following packet has been transmitted in the WPC authentication process of S707a (NO in S1205). Specifically, the TX may not receive a DIGEST packet in response to the transmitted GET_DIGEST packet or may receive another packet. The TX may not receive a CERTIFICATE packet in response to the transmitted GET_CERTIFICATE packet or may receive another packet. The TX may not receive a RESPONSE packet in response to the transmitted CHALLENGE packet or may receive another packet.

In S1103, the RX transmits Auth_req for inquiring about whether the TX is to perform a process with the TX as an initiator and with the RX as a responder. However, the RX may determine whether the TX can operate as an initiator and transmit Auth_req. For example, the TX may store information indicating whether the TX has an initiator function or a responder function in a part of the transmitter capability packet. Similarly, the RX may store information indicating whether the RX has an initiator function or a responder function in a part of the configuration packet. The RX transmits Auth_req to the TX in S1103 when the TX has an initiator function and does not transmit Auth_req to the TX when the TX does not have an initiator function. As a result, since a useless time required for the RX to transmit Auth_req even when the TX does not have an initiator function can be reduced, it is possible to shorten the process time.

Auth_req in S1103 is a packet serving as a trigger for causing the TX to transmit GET_DIGEST. The packet in this case may be a packet for inquiring about whether the TX includes data to be transmitted to the RX or a packet indicating that an authority to transmit data is given to the TX. When it is determined that there is data to be transmitted to the RX or it is determined that an authority to transmit data is required, the TX transmits a positive response ACK to the RX (YES in S1204). When it is determined that there is no data to be transmitted to the RX or it is determined that an authority to transmit data is not required, the TX transmits a negative response NAK to the RX. Accordingly, the same effects as in the aforementioned example are obtained.

The RX may transmit a general request(ID) to the TX and acquire identification information from the TX prior to transmission of Auth_req in S1100. The general request(ID) is a packet for acquiring identification information of the TX, the identification may be stored as identification information of a responder in Auth_req. As a result, the TX having received Auth_req can see that the TX is to operate as a responder. Then, the TX waits until GET_DIGEST is received and can be subjected to WPT authentication. Here, the RX may store the identification information of the RX as identification information of an initiator in Auth_req or store the identification information of TX as identification information of a responder. As a result, the TX can clearly see that the RX is to authenticate the validity of the TX. In S1103, the RX stores the identification information of the RX as identification information of a responder in Auth_req or stores the identification information of the TX as identification information of an initiator. As a result, the TX having received Auth_req can see that the TX is to operate as an initiator.

In FIGS. 11 and 12, an example of the process flow that is performed by the control units of the RX and the TX when the RX first operates as an initiator and authenticates the validity of the TX is illustrated. Unlike this example, the same effects are obtained when the TX first operates as an initiator and authenticates the validity of the RX. In the flowchart illustrating the process flow performed by the control unit 201 of the RX in this case, a series of processes of S1100, S1101, S906b, and S1102 and a series of processes of S1103, S1104, S1105, S906a, and S1106 are exchanged in FIG. 11. In the flowchart illustrating the process flow performed by the control unit 101 of the TX, a series of processes of S1200, S1201, S706, S707b, and S1202 and a series of processes of S 1203, S1204, S707a, and S1205 are exchanged in FIG. 12.

With the aforementioned configuration, it is possible to determine control details of power transmission or power reception with higher accuracy and to further enhance security. The TX and the RX in the present disclosure have an initiator function associated with WPT authentication. The TX or the RX may store an operation result as an initiator (that is, an authentication result for validity of a responder) and identification information of the responder (such as a device ID, a manufacturer ID, and information on a certificate) in a nonvolatile memory which is not illustrated. The TX or the RX may store only the identification information of a responder having failed in authentication in the nonvolatile memory. The TX and the RX may operate such that the same device as a responder of which identification information is stored in the nonvolatile memory does not perform an authentication process with the device as an initiator. Specifically, when a request for operating as a responder to authenticate validity has been received from a device which is a responder having failed in authentication and of which identification information is stored in the nonvolatile memory, the TX and the RX reject the request.

For example, it is assumed that the RX operates as an initiator and has failed in authentication for the TX. In this case, the RX stores identification information as a responder of the TX in the nonvolatile memory. Then, the RX transmits a packet for inquiring of the TX about whether there is data to be transmitted to the RX or a packet for giving an authority to transmit data to the TX to the TX. Then, the RX receives an ACK in response to the transmitted packet. This ACK is a positive response indicating that there is data to be transmitted from the TX to the RX or an authority to transmit data is given to the TX. Subsequently, when a packet (Auth_req) indicating that a WPT authentication process with the TX as an initiator and with the RX as a responder is to start is received, the RX transmits a negative response NAK on the basis of the identification information stored in the nonvolatile memory. Accordingly, when the RX has performed WPT authentication, an authentication process in which a device (the TX in this case) having failed in authentication operates as an initiator cannot be performed. That is, since later WPT authentication can be prevented from being performed when earlier WPT authentication has not succeeded, it is possible to shorten a process time in the authentication phase when validity has not been authenticated through the earlier WPT authentication.

The same is true when the TX has failed in authentication for the RX with the TX as an initiator. For example, the TX stores identification information of the RX as a responder having failed in authentication in the nonvolatile memory. In this state, when a packet (Auth_req) indicating that the WPT authentication process with the RX as an initiator and with the TX as a responder is to start has been received from the RX, the TX transmits a negative response NAK. Since an authentication process can be prevented from being performed by a device having failed in authentication with the device as an initiator, it is possible to shorten the process time in the authentication phase.

The TX and the RX may operate such that a device which is a responder having failed in authentication and of which identification information is stored in the nonvolatile memory does not transmit a request for authentication of validity with the TX and the RX as a responder. For example, it is assumed that the RX has a function of transmitting a packet for inquiring of the TX about whether there is data to be transmitted to the RX or a packet for giving an authority to transmit data to the TX. The RX determines that the packet is not to be transmitted to the device (that is, the TX) which is a responder having failed in authentication and of which identification information is stored in the nonvolatile memory. It is also assumed that the TX has a function of transmitting a packet for inquiring of the RX about whether there is data to be transmitted to the TX or a packet for giving an authority to transmit data to the RX. The TX determines that the packet is not to be transmitted to the device (that is, the RX) which is a responder having failed in authentication and of which identification information is stored in the nonvolatile memory.

In a modified example, by avoiding execution of later WPC authentication and determining the GP when earlier authentication out of WPC authentications to be interactively performed has failed, it is possible to shorten the process time in the authentication phase and to early determine the GP.

### [Other modified examples]

In this modified example, an example of a process flow that is performed in an RX of WPC standard version A (v1.3 EPP) in a situation in which the RX cannot authenticate a TX (a responder) at the time of execution of authentication with the RX as an initiator or authentication challenge fails will be described. At the time of authentication failure when the RX operates as an initiator, power reception control appropriate for the RX is performed. In this modified example, the control unit 201 of the RX determines control details of power reception on the basis of the WPT authentication result. For example, the control details of power reception include information indicating whether power reception is to be performed or a maximum value of a power value required for the TX when power reception is performed. In the following description, it is assumed that the power reception device (RX) has version A and the power transmission device (TX) has an arbitrary version defined in the WPC standard.

First, the RX of version A performs an authentication process together with the TX and then determines whether the TX is a power transmission device supporting the authentication function corresponding to version A of the WPC standard. Then, when it is determined that the TX is a power transmission device not supporting the authentication function, the RX checks whether the TX is a power transmission device of EPP. When the TX is a power transmission device of EPP, the RX performs power reception control such that the GP which is power received from the TX is allowed up to, for example, 15 W. When it is determined that the TX is not a power transmission device of EPP or is a power transmission device of EPP not supporting the authentication function, the RX performs power reception control such that the GP which is power received from the TX is allowed up to, for example, 5 W.

When it is determined that the TX is a power transmission device supporting the authentication function corresponding to version A of the WPC standard, the RX of version A performs the authentication process using an electronic certificate. In the following description, a process flow in the authentication phase using an electronic certificate when the TX and the RX have version A (EPP of WPC standard v1.3) will be described.

When the authentication using an electronic certificate performed by the authentication unit 208 together with the TX has failed, the control unit 201 of the RX checks validity and a defect associated with details of the electronic certificate. At this time, when it is determined that the TX is not reliable due to a certain defect, the RX controls received power under the following conditions.

When it is determined that the TX is an unreliable power transmission device due to a defect of the electronic certificate, the RX performs power reception control such that the GP is allowed up to a maximum 5 W as the power received from the TX. When it is determined that the electronic certificate has a defect due to a communication error with the TX, the RX performs power reception control such that the GP is allowed up to a maximum 15 W.

When a defect has not been detected in the electronic certificate as a result of authentication using the electronic certificate performed by the authentication unit 208 together with the TX, the control unit 201 of the RX checks whether the electronic certificate has been revoked. Here, revocation means that the validity of the electronic certificate has been deleted for a certain cause. For example, a product in which the TX or the RX is mounted may be a recovery target based recall due to a defect of the product. In this case, when the electronic certificate is regularly issued and is correct but the product in which the TX or the RX is mounted is defective, it is necessary to limit transmitted or received power in consideration of safety at the time of use. Information for identifying the revoked TX or RX may be stored in advance as a revocation list with identification information such as Qi-ID of devices in a memory of the devices at the time of manufacturing.

When there is no problem in a result of check associated with revocation of the electronic certificate and the authentication has succeeded, the RX may perform power reception control such that the GP which is power received from the TX is allowed up to a maximum 15 W. When it is determined that the TX is not accepted in Qi as a result of check associated with revocation of the electronic certificate or is a non-safe power transmission device, the RX performs control such that power is not received from the TX. At the same time, the RX displays an appropriate message or the like to a user and notifies that an error associated with a charging process has occurred. When Qi-ID is revoked due to a certain cause as a result of check associated with revocation of the electronic certificate or the authentication has failed due to a cause other than the aforementioned causes, the RX performs power reception control such that the GP which is power received from the TX is allowed up to a maximum 5 W.

In this modified example, when authentication for a power transmission device with a power reception device as an initiator has failed, appropriate power reception control is performed by determining the GP according to the cause of the authentication error.

### [Embodiment]

An embodiment of the present disclosure will be described in consideration of the aforementioned interactive authentication techniques. In the present embodiment, an example of a process flow that is performed by a TX when the TX of WPC standard version A (v1.3 EPP) cannot authenticate an RX (a responder) at the time of execution of an authentication process with the TX as an initiator or a situation in which an authentication challenge has failed occurs will be described in detail. When the TX has failed in authentication in the authentication process for the RX, appropriate control details can be determined and power transmission control can be performed by determining a cause of an authentication error.

The control unit 101 of the TX determines whether power is to be transmitted to the RX or a maximum value of a power value which is allowable when power is transmitted as control details of power transmission on the basis of a WPT authentication result. On the other hand, the control unit 201 of the RX determines whether power is to be received from the TX or a maximum value of a power value which is required for the TX when power is received as control details of power reception on the basis of a WPT authentication result. In the present embodiment, it is assumed that the TX operates as an initiator and authenticates validity of the RX.

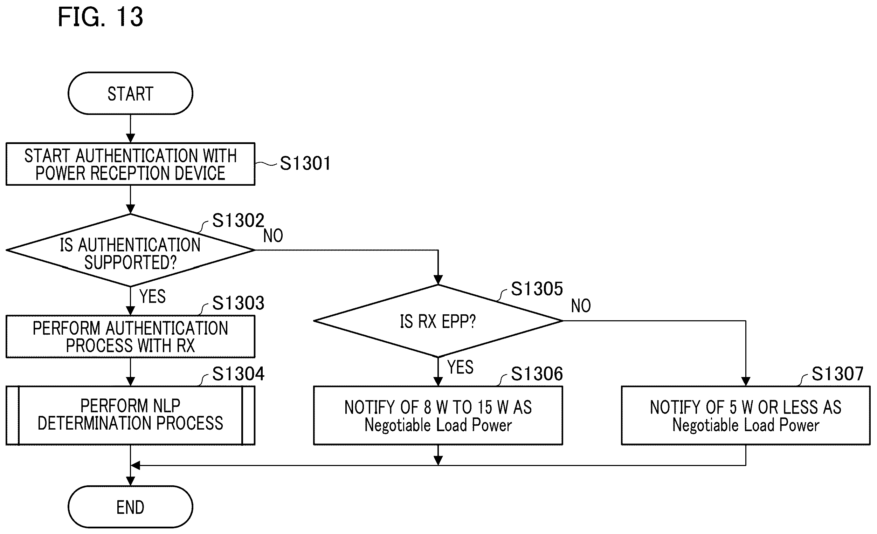

FIG. 13 is a flowchart illustrating a process flow for authentication that is performed by the control unit 101 of the TX. In S1301, the TX of version A of the WPC standard starts authentication for the RX. Then, in S1302, the TX determines whether the RX is a power reception device supporting the authentication function corresponding to version A of the WPC standard. When it is determined that the RX is a power reception device supporting the authentication function corresponding to version A of the WPC standard (YES in S1302), the process flow proceeds to the process of S1303. When it is determined that the RX is a power reception device not supporting the authentication function (NO in S1302), the process flow proceeds to the process of S1305.

In S1303, the TX of version A performs the authentication process using an electronic certificate. Then, in S1304, the TX performs an NLP determining process in the authentication phase using the electronic certificate. In S1305, the TX determines whether the RX is a power reception device of EPP. When it is determined that the RX is a power reception device of EPP (YES in S1305), the TX causes the process flow to proceed to the process of S1306. When it is determined that the RX is not a power reception device of EPP (NO in S1305), the TX causes the process flow to proceed to the process of S1307.

In S1306, the TX determines power which is transmittable to the RX of EPP and performs control such that the RX is notified. Specifically, the TX sets transmitted power information indicating that power in a range of equal to or greater than 8 W and to equal to or less than 15 W is transmitted in the NLP which is capability information of the power transmission device and notifies the RX. In S1307, the TX determines power which is transmittable to the RX other than EPP and performs control such that the RX is notified. Specifically, the TX sets transmitted power information indicating that power of 5 W or less is transmitted in the NLP which is capability information of the power transmission device and notifies the RX. Subsequently to S1304, S1306, and S1307, this process flow ends.

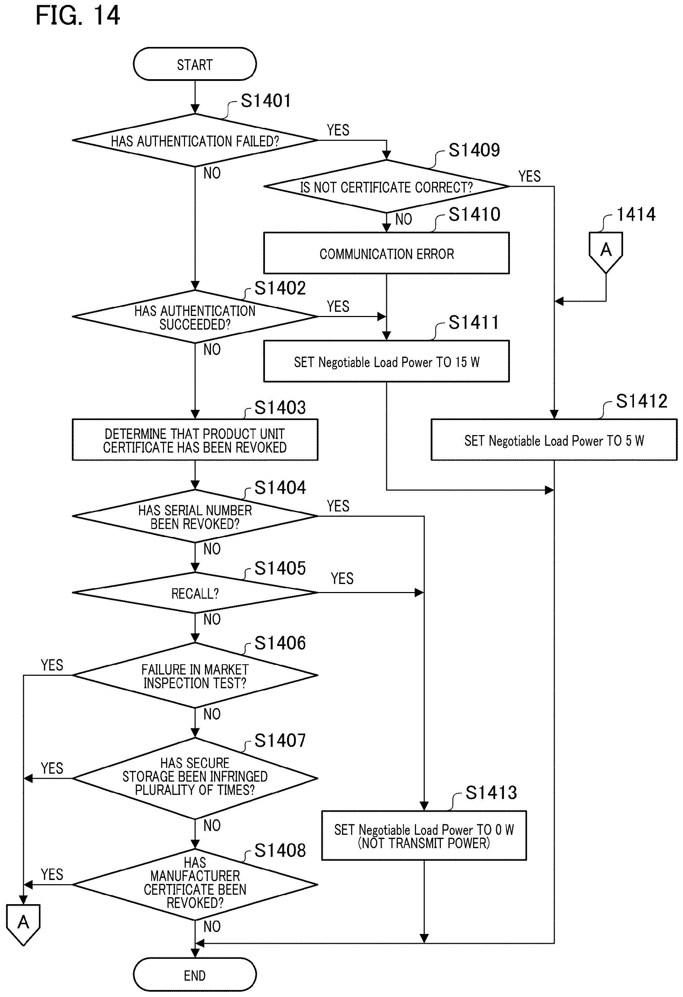

FIG. 14 is a flowchart illustrating processes in authentication that is performed by the control unit 101 of the TX. In the following description, it is assumed that both the TX and the RX have version A (WPC standard v1.3 EPP). In S1401, the control unit 101 of the TX determines whether authentication has failed. Authentication is authentication using an electronic certificate which is performed by the second authentication unit 109 together with the RX. When it is determined that the authentication has failed on the basis of a result of authentication (YES in S1401), the control unit 101 of the TX causes the process flow to proceed to the process of S1409. When it is determined that the authentication has not failed on the basis of the result of authentication (NO in S1401), the control unit 101 of the TX causes the process flow to proceed to the process of S1402.

In S1409, the TX checks validity and a defect in details of the electronic certificate. For example, there may be defects such that the electronic certificate is not correctly formatted, is not be correctly signed, or is not linked to route CA (a certification authority) of the WPC. When it is determined that there is a defect in the electronic certificate of the TX and the RX is not reliable (YES in S1409), the TX causes the process flow to proceed to the process of S1412. When it is determined that the electronic certificate of the RX is valid and has no defect (NO in S1409), the TX causes the process flow to proceed to the process of S1410.

In S1412, the TX sets transmitted power information indicating that power of 5 W or less is transmitted in the NLP which is capability information of the power transmission device and notifies the RX, and then this process flow ends. In S1410, the TX determines that the electronic certificate has a defect due to an excessively high bit error rate or the like in communication with the RX. That is, the TX determines that the authentication in S1401 has failed due to occurrence of a communication error. Then, in S1411, the TX sets transmitted power information indicating that a maximum power of 15 W is transmitted in the NLP which is capability information of the power transmission device and notifies the RX, and then this process flow ends.

In S 1402, the TX checks revocation of the electronic certificate. The TX causes the process flow to proceed to the process of S1411 when it is determined that there is no problem in check of revocation of the electronic certificate and the authentication has succeeded (YES in S1402) and causes the process flow to proceed to the process of S1403 when it is determined that the authentication has not succeeded (NO in S1402). In S1403, the TX determines that an electronic certificate of a product unit in which the RX is mounted has been revoked. In S1404, the RX determines whether a serial number has been revoked. For example, when the electronic certificate has been revoked due to revocation of the serial number of the electronic certificate because a copied secret key is used or the like (YES in S1404), the TX determines that the RX is a power reception device of which Qi is not accepted. In this case, the process flow proceeds to the process of S1413.

When it is determined in S1404 that the serial number has not been revoked, the process flow proceeds to the process of S1405. When it is determined in S1405 that the electronic certificate has been revoked due to revocation of the Qi-ID based on recall of a product on the basis of a result of check associated with revocation of the electronic certificate (YES in S1405), the TX determines that the RX is not safe. In this case, the process flow proceeds to the process of S1413.

When it is determined in S1404 and S1405 that the electronic certificate has been revoked, the TX sets the NLP which is capability information of the power transmission device to zero watts in S1413. The TX performs control such that power is not transmitted to the RX and notifies of an error associated with the charging process by displaying an appropriate message or the like to a user. Then, this process flow ends.

When it is determined in S1405 that there is no revocation of Qi-ID based on recall of a product or the like, the process flow proceeds to the process of S1406. In S1406, the TX determines whether a result of a market inspection or test is failure on the basis of the result of check associated with revocation of the electronic certificate. When the electronic certificate has been revoked due to revocation of Qi-ID based on fail in the market inspection or test (YES in S1406), the TX determines that the RX is not based on Qi specifications. In this case, the process flow proceeds to the process of S1412 (see node 1414).

When it is determined in S1406 that the result of the market inspection or test is not fail, the process flow proceeds to the process of S1407. In S1407, the TX determines whether authentication has not succeeded because a secrete key in a secure storage has been infringed a plurality of times or includes stolen qualification information on the basis of the result of check associated with revocation of the electronic certificate. When the electronic certificate has been revoked due to the this determination condition (YES in S1407), the TX determines that the RX is a power reception device without guaranteed safety. In this case, the process flow proceeds to the process of S1412 (see node 1414).

When the determination condition of S1407 is not satisfied, the process flow proceeds to the process of S1408. In S1408, the TX determines whether a certificate of a manufacturer CA (a manufacturer certificate) has been revoked on the basis of the result of check associated with revocation of the electronic certificate. When it is determined that the manufacturer certificate has been revoked (YES in S1408), the TX determines that the RX is a power reception device which has not been authenticated. In this case, the process flow proceeds to the process of S1412 (see node 1414). When it is determined that the manufacturer certificate has not been revoked (NO in S1408), this process flow ends.

When the determination conditions in S1406, S1407, and S1408 are satisfied, the TX sets transmitted power information indicating that power of 5 W or less is transmitted in the NLP which is capability information of the power transmission device and notifies the RX in S1412.

In the present embodiment, when the TX operates as an initiator and has failed in authentication for the RX, the TX sets information of a transmittable power (transmitted power information) corresponding to the cause of the authentication error in the NLP which is capability information of the power transmission device and notifies the RX. It is possible to realize flexible and appropriate power transmission control on the basis of a result of authentication that is performed on the RX by the TX.

### [Other embodiments]

The wireless power transfer system according to the present disclosure is not limited to any specific system. For example, there is a magnetic field resonance system of transferring power through coupling based on resonance of a magnetic field between a resonator (a resonance element) of the TX and a resonator (a resonance element) of the RX. An electromagnetic induction system, an electric field resonance system, a microwave system, a power transfer system using a laser, or the like may be used.

The present disclosure can also be realized using a process of supplying a program for realizing one or more functions in the aforementioned embodiments to a system or a device via a network or a storage medium and causing one or more processors in a computer of the system or the device to read and execute the program. The present disclosure can also be realized by a circuit (for example, an ASIC) for realizing one or more functions.

The TX and the RX may be an image input device such as an imaging device (such as a still camera or a video camera) or a scanner or an image output device such as a printer, a copier, or a projector. The TX and the RX may be a memory device such as a hard disk device or an information processing device such as a personal computer or a smartphone.

The power reception device according to the present disclosure may be an information terminal device. For example, the information terminal device includes a display unit (display) which is supplied with power received from a power reception antenna and which displays information to a user. The power received from the power reception antenna is stored in a power storage unit (a battery), and the display unit is supplied with power from the battery. In this case, the power reception device may include a communication unit for communicating with another device other than a power transmission device. The communication unit may comply with a communication standard such as NFC communication or a 5-th generation mobile communication system (5G).

The power reception device according to the present disclosure may be a vehicle such as an automobile. For example, an automobile which is a power reception device may be supplied with power from a charger (a power transmission device) via a power transmission antenna installed in a parking lot. The automobile which is a power reception device may be supplied with power from a charger (a power transmission device) via a power transmission antenna buried in a road. The power received by this automobile is supplied to a battery. Power of the battery may be supplied to an engine (a motor or an electric motor) for driving vehicle wheels or may be used to drive a sensor for driving assistance or to drive a communication unit for communicating with an external device. That is, in this case, the power reception device may include a battery, a motor or a sensor that is driven using the received power, and a communication unit for communicating with a device other than the power transmission device in addition to vehicle wheels. The power reception device may include an accommodation unit for accommodating a person. For example, a sensor used to measure an inter-vehicle distance or a distance to another obstacle is used as the sensor. The communication unit may comply with, for example, a global positioning system or global positioning satellites (GPS). The communication unit may comply with a communication standard such as a 5-th generation mobile communication system (5G). A bicycle or a motorbike may be used as the vehicle.

The power reception device according to the present disclosure may be an electrical tool or home appliances. Such devices serving as the power reception device may include a motor that is driven using received power stored in a battery in addition to the battery. Such devices may include a notification means configured to notify of a residual state of charge of the battery. Such devices may include a communication unit for communicating with another device other than the power transmission device. The communication unit may comply with a communication protocol such as NFC or a 5-th generation mobile communication system (5G).

The power transmission device according to the present disclosure may be an onboard charger that transmits power to a mobile information terminal device such as a smartphone or a tablet complying with wireless power transfer in a vehicle such as an automobile. This onboard charger may be provided at any position in the automobile. For example, the onboard charger may be installed in a console of the automobile or installed in an instrument panel (a control board or a dashboard), at a position between passenger's seats, on the ceiling, or in a door. Here, the onboard charger is not preferably installed at a position which is likely to hinder driving. The onboard charger has been exemplified as the power transmission device, but such a charger is not limited to a vehicle and may be installed in a transportation machine such as a subway train, an aircraft, or a ship. In this case, the charger may be installed at a position between passenger's seats, on the ceiling, or in a door.

A vehicle such as an automobile including an onboard charger may be a power transmission device. In this case, the power transmission device includes vehicle wheels and a battery and supplies power to a power reception device via a power transmission circuit unit or a power transmission antenna using power in the battery.

The processes illustrated in FIGS. 5, 7, and 9 and FIGS. 11 to 14 are started, for example, when the control unit 101 or the control unit 201 is powered on. The processes illustrated in FIGS. 5(A) and 7 and FIGS. 12 to 14 are realized by causing the CPU of the control unit 101 to execute a program stored in the memory 107 of the TX. The processes illustrated in FIGS. 5(B), 9, and 11 are realized by causing the CPU of the control unit 201 to execute a program stored in the memory 209 of the RX. Some of the processes illustrated in FIGS. 5, 7, and 9 and FIGS. 11 to 14 may be realized by hardware. For example, a dedicated circuit can be automatically generated on an FPGA from programs for realizing processing steps using a predetermined compiler. Similarly to the FPGA, a gate array circuit may be formed to realize some processes as hardware.

### (Cross-reference to related application)

Priority is claimed on Japanese Patent Application No. 2023-107045, filed June 29, 2023. The content of this Japanese Patent Application is incorporated herein by reference.

## Claims

1. A power transmission device comprising:
a power transmission means configured to wirelessly transmit power to a power reception device; and
an authentication means configured to perform an authentication process using an electronic certificate together with the power reception device,
wherein when the authentication has not succeeded, the power transmission means performs power transmission control on the basis of a cause of unsuccess of the authentication.

2. The power transmission device according to claim 1, wherein when authentication in the authentication means has not succeeded, the power transmission means limits an allowable power value to be transmitted to the power reception device to a value lower than a value when authentication in the authentication means has succeeded or does not transmit power to the power reception device according to a cause of an authentication error.

3. The power transmission device according to claim 1, further comprising a communication means configured to communicate with the power reception device,
wherein when the power reception device does not have an authentication function, the communication means notifies the power reception device of transmitted power information indicating transmittable power based on a power reception capability of the power reception device.

4. The power transmission device according to claim 3, wherein when the power reception device has a specification that the power reception device receives first power from the power transmission device or a specification that the power reception device does not have an authentication function and receives power greater than the first power and less than or equal to second power from the power transmission device, the communication means notifies the power reception device of information indicating that the transmittable power of the power transmission device is limited power.

5. The power transmission device according to claim 4, wherein when the authentication means determines that the power reception device has a specification that the power reception device does not have an authentication function and receives power greater than the first power and less than or equal to second power from the power transmission device as a result of authentication performed together with the power reception device, the communication means notifies the power reception device of information indicating that the transmittable power of the power transmission device is a power greater than third power greater than the first power and less than or equal to the second power.

6. The power transmission device according to claim 1, further comprising a communication means configured to communicate with the power reception device,
wherein when the authentication has not succeeded due to a communication error, the communication means notifies the power reception device of transmitted power information indicating transmittable power of the power transmission device.

7. The power transmission device according to claim 1, further comprising a communication means configured to communicate with the power reception device,
wherein when the electronic certificate has been determined to be revoked, the communication means notifies the power reception device of transmitted power information indicating that a transmittable power of the power transmission device is limited power or notifies the power reception device of information indicating that power is not transmitted to the power reception device.

8. The power transmission device according to claim 1, further comprising a communication means configured to communicate with the power reception device,
wherein when the authentication is determined to have not succeeded due to revocation of a serial number of the electronic certificate or revocation based on recall, the communication means notifies the power reception device of information indicating that power is not transmitted to the power reception device.

9. The power transmission device according to claim 1, further comprising a communication means configured to communicate with the power reception device,
wherein when the electronic certificate is determined to have been revoked due to failure of an inspection test, infringement of a secret key, or stolen qualification information, or a manufacturer certificate is determined to have been revoked, the communication means notifies the power reception device of transmitted power information indicating that a transmittable power of the power transmission device is limited power.

10. A method executed by a power transmission device, the method comprising:
a power transmission step of wirelessly transmitting power to a power reception device; and
an authentication step of performing an authentication process using an electronic certificate together with the power reception device,
wherein when the authentication has not succeeded, the power transmission step includes performing power transmission control on the power reception device on the basis of a cause of unsuccess of the authentication.

11. A program causing a computer to perform the steps according to claim 10.
